(19) **Europäisches Patentamt / European Patent Office / Office européen des brevets**

(11) **EP 4 264 253 B1**

(12) **FASCICULE DE BREVET EUROPEEN**

(45) Date de publication et mention de la délivrance du brevet:
**24.12.2025 Bulletin 2025/52**

(21) Numéro de dépôt: **21851617.7**

(22) Date de dépôt: **16.12.2021**

(51) Classification Internationale des Brevets (IPC):
**G01N 29/26** *(2006.01)*     **G01N 29/06** *(2006.01)*
**G01N 29/44** *(2006.01)*     **G01N 29/32** *(2006.01)*
**G01N 29/04** *(2006.01)*

(52) Classification Coopérative des Brevets (CPC):
**G01N 29/262; G01N 29/043; G01N 29/0654; G01N 29/32; G01N 29/4463;** G01N 2291/0234; G01N 2291/106

(86) Numéro de dépôt international:
**PCT/FR2021/052368**

(87) Numéro de publication internationale:
**WO 2022/129805 (23.06.2022 Gazette 2022/25)**

(54) **PROCEDE, DISPOSITIF ET PROGRAMME DE DETECTION PAR ULTRASONS DE DEFAUTS DANS UN MATERIAU**

VERFAHREN, VORRICHTUNG UND PROGRAMM ZUR DETEKTION VON MATERIALDEFEKTEN MITTELS ULTRASCHALL

METHOD, DEVICE AND PROGRAM FOR DETECTING, BY ULTRASOUND, DEFECTS IN A MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2020 FR 2013483**

(43) Date de publication de la demande:
**25.10.2023 Bulletin 2023/43**

(73) Titulaire: **Electricité de France
75008 Paris (FR)**

(72) Inventeurs:
• COURET, Laura
  **92300 Levallois-Perret (FR)**
• PAUL, Nicolas
  **93100 Montreuil (FR)**

(74) Mandataire: **Regimbeau
Parc d'affaires Cap Nord A
2, allée Marie Berhaut
CS 71104
35011 Rennes Cedex (FR)**

(56) Documents cités:
**FR-A1- 3 085 481     US-A1- 2019 380 684**

• **RAMAZAN DEMIRLI ET AL: "Ultrasound NDE imaging through reverberant layers via subspace analysis and projection", ULTRASONICS SYMPOSIUM (IUS), 2012 IEEE INTERNATIONAL, IEEE, 7 October 2012 (2012-10-07), pages 1031 - 1034, XP032434626, ISSN: 1948-5719, ISBN: 978-1-4673-4561-3, DOI: 10.1109/ULTSYM.2012.0258**

EP 4 264 253 B1

**Description**

L'invention concerne un procédé et un dispositif de détection par ultrasons de défauts dans un matériau.

Le domaine de l'invention concerne le contrôle non destructif de défauts par ultrasons, qui peut être utilisée sur les produits moulés des circuits primaires de centrale nucléaire, mais peut aussi s'appliquer à d'autres composants du parc nucléaire et à d'autres secteurs industriels comme l'aéronautique ou le naval.

La présente invention s'applique avantageusement sur les matériaux complexes. Par matériau complexe on entend, tout type de matériau générant des signaux parasites pouvant masquer la détection de défauts.

Afin de détecter de potentiels défauts dans le matériau, une méthode courante consiste à appliquer contre une surface du matériau une sonde ultrasonore multiéléments, comportant des transducteurs, que l'on met tour à tour en mode émetteur et en mode récepteur des signaux de mesures ultrasonores se propageant dans le matériau.

Le signal parasite peut par exemple correspondre aux ondes latérales ou aux ondes de proche surface qui peuvent sensiblement gêner la détection de défaut dans les premiers millimètres de profondeur du matériau. Cette zone des premiers millimètres de profondeur sous la surface du matériau est parfois considérée comme une zone morte car les éventuels défauts qui y sont présents peuvent être masqués par le bruit ambiant. Ce signal parasite peut également correspondre par exemple au bruit de structure, ce bruit résultant d'une microstructure hétérogène du matériau. Lorsque la longueur d'onde des ondes ultrasonores émises par la sonde est proche du diamètre moyen des grains du matériau, ce bruit est particulièrement gênant pour l'analyse des acquisitions, notamment lorsque ce bruit est supérieur au niveau du signal réfléchi par un potentiel défaut.

L'invention cherche à diminuer ou supprimer l'influence du bruit dans les acquisitions des signaux de mesure.

Une méthode connue de traitement de ce type de signaux de mesures ultrasonores est la méthode appelée Focalisation Tout Point (FTP) (en anglais : Total Focusing Method (TFM)). Cette méthode produit pour chaque position de la sonde une image correspondant à une coupe transversale du matériau sous la sonde. La présence de bruits parasites (ondes de proche surface, bruit de structure) détériore fortement la qualité de ces images, compromettant ainsi la bonne détection des potentiels défauts dans le matériau.

Sans post-traitement possible sur la TFM, le bruit engendré par les ondes de surfaces et/ou par l'hétérogénéité de la microstructure peut être si important qu'il rend la détection de défauts difficile voire impossible dans certains cas, surtout à faible profondeur.

Le bruit parasite observé sur les images issues de la TFM présente une inhomogénéité spatiale : il varie sensiblement en fonction de la localisation des points. En particulier, il a tendance à être plus élevé à proximité de la barrette d'émetteurs/récepteurs (effet des ondes de surface).

On connaît par le document FR-A-3085481 un procédé de détection et de caractérisation par ultrasons de défauts dans un matériau hétérogène, prévoyant de post-traiter l'image obtenue, par exemple par la méthode TFM, à l'aide des statistiques suivantes : une mesure de la tendance centrale de l'amplitude focalisée au niveau du point sondé sur différentes positions de sonde, une mesure de la fonction représentative de la variabilité de l'amplitude focalisée au niveau du point sondé sur différentes positions de sonde. Une autre méthode de focalisation enseignée par le document FR-A-3085481 est la méthode d'imagerie par onde plane, désignée par PWI (de l'anglais "Plane Wave Imaging"), où les différentes configurations se distinguent entre elles par des retards différents appliqués à l'émission d'ondes ultrasonores par les transducteurs émetteurs en excitant tous les transducteurs de façon uni-séquentielle.

Toutefois, ces statistiques utilisées dans le procédé connu par le document FR-A-3085481 supposent qu'il y ait des zones saines (exemptes de défaut) dans l'image, afin que ces zones saines puissent être apprises au préalable pour constituer des zones représentatives ou zones de référence du matériau inspecté. Ces mesures vont alors permettre de normaliser le bruit et de repérer des éventuels écarts d'amplitude synonymes de défaut. Les statistiques réalisées sur les zones saines correspondent à une phase d'apprentissage du matériau que l'on étudie. Cette phase d'apprentissage n'est réalisable que si l'on dispose de zones saines et représentatives, servant de zones de référence. En l'absence de telles zones saines et représentatives, servant de zones de référence, il faudrait mettre en œuvre une étape préliminaire à l'exploitation du procédé du document FR-A-3085481, et donc organiser des essais supplémentaires, ce qui alourdit la durée globale des mesures.

Le document RAMAZAN DEMIRLI ET AL, "Ultrasound NDE imaging through reverberant layers via subspace analysis and projection", ULTRASONICS SYMPOSIUM (IUS), 2012 IEEE INTERNATIONAL, IEEE, (20121007), doi:10.1109/ULTSYM.2012.0258, ISSN 1948-5719, ISBN 978-1-4673-4561-3, pages 1031 - 1034, décrit un procédé de production d'images de défaut par un ensemble de transducteurs ultrasonores, utilisant une décomposition en composantes principales des mesures pour supprimer un bruit de réverbération des ondes ultrasonores.

Le document US2019/380684A1 décrit un procédé d'obtention d'images d'un flux de fluide dans un objet d'intérêt.

Un but de la présente invention est de fournir un procédé et un dispositif de détection par ultrasons de défauts dans un matériau, qui pallient les inconvénients mentionnés ci-dessus et qui fasse l'économie d'une telle zone de référence quand elle n'est pas disponible.

A cet effet, un premier objet de l'invention est un procédé de détection par ultrasons de défauts dans un matériau suivant la revendication 1.

Grâce à l'invention, on atténue ou supprime les signaux parasites dans lesquels étaient noyés les éventuels défauts du matériau inspecté, ce qui permet de mieux détecter ces défauts. Ainsi, l'invention ne nécessite pas la phase d'apprentissage enseignée par le document FR-A-3085481.

Les revendications 2 à 14 concernent des modes de réalisation du procédé suivant l'invention.

Un deuxième objet de l'invention est un dispositif de détection par ultrasons de défauts dans un matériau suivant la revendication 15.

Les revendications 16 et 17 concernent des modes de réalisation du dispositif suivant l'invention.

Un troisième objet de l'invention est un programme d'ordinateur de détection par ultrasons de défauts suivant la revendication 18.

L'invention sera mieux comprise à la lecture de la description qui va suivre, donnée uniquement à titre d'exemple non limitatif en référence aux figures ci-dessous des dessins annexés.

[Fig. 1] représente une vue schématique en perspective d'un dispositif de détection par ultrasons de défauts suivant un mode de réalisation de l'invention.

[Fig. 2] représente une vue schématique en coupe transversale d'un dispositif de détection par ultrasons de défauts suivant un mode de réalisation de l'invention.

[Fig. 3] représente une vue schématique en coupe transversale d'un dispositif de détection par ultrasons de défauts suivant un mode de réalisation de l'invention.

[Fig. 4] représente une vue schématique en coupe transversale d'un dispositif de détection par ultrasons de défauts suivant un mode de réalisation de l'invention.

[Fig. 5] représente un organigramme d'un procédé de détection par ultrasons de défauts suivant un mode de réalisation de l'invention.

[Fig. 6] représente des signaux de mesure acquis au cours du procédé de détection par ultrasons de défauts suivant un mode de réalisation de l'invention.

[Fig. 7] représente une image obtenue sans mettre en œuvre le procédé et le dispositif de détection de défauts suivant un mode de réalisation de l'invention.

[Fig. 8] représente une image obtenue en mettant en œuvre le procédé et le dispositif de détection de défauts suivant un mode de réalisation de l'invention à partir des signaux de mesure de la figure 7.

[Fig. 9] représente une image obtenue en mettant en œuvre le procédé et le dispositif de détection de défauts suivant un mode de réalisation de l'invention qui comporte en outre l'application d'un filtrage bilatéral.

[Fig. 10] est un graphique représentant le rapport signal sur bruit en fonction d'un paramètre de nombre de composantes choisi du procédé et du dispositif de détection de défauts suivant un mode de réalisation de l'invention.

[Fig. 11] représente une image obtenue de la même configuration qu'en figure 7 par le procédé et le dispositif de détection de défauts suivant un mode de réalisation de l'invention avec utilisation du critère de sélection du nombre de composantes et ajout d'un filtrage bilatéral.

[Fig. 12] représente une image obtenue de la configuration utilisée pour le graphe de la figure 10 sans avoir mis en œuvre le procédé et le dispositif de détection de défauts suivant un mode de réalisation de l'invention.

[Fig. 13] représente une image obtenue de la configuration utilisée pour le graphe de la figure 10 par le procédé et le dispositif de détection de défauts suivant un mode de réalisation de l'invention avec utilisation du critère de sélection du nombre de composantes et ajout d'un filtrage bilatéral.

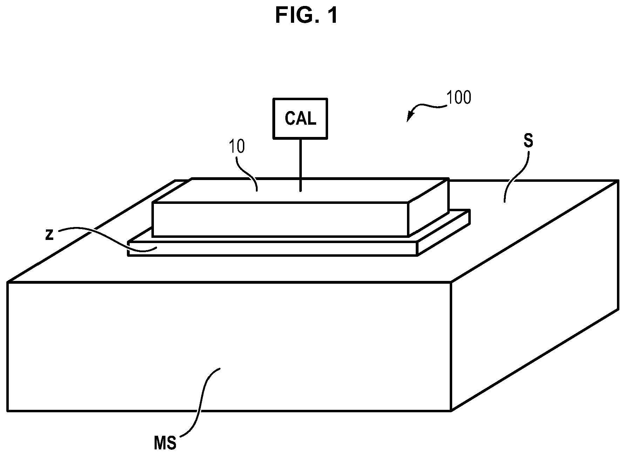

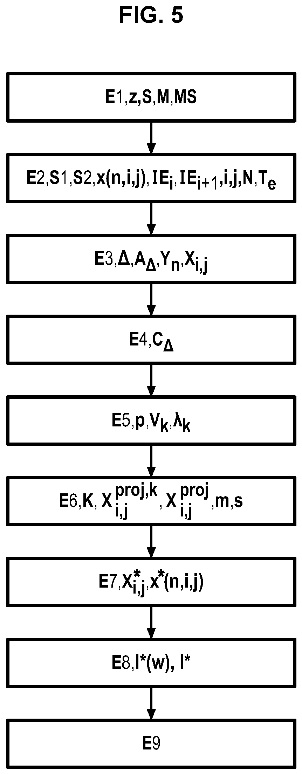

On décrit ci-dessous en référence aux figures 1 à 5, le procédé de détection par ultrasons de défauts, le dispositif 100 de détection par ultrasons de défauts et le programme d'ordinateur mettant en œuvre ce procédé. Le dispositif 100 de détection de défauts comporte une sonde multi-élément 10, comprenant des transducteurs ultrasonores 14, 15 pouvant être émetteurs et/ou récepteurs d'ultrasons. Les étapes du procédé de détection par ultrasons de défauts sont décrites en référence à la figure 5. Lors d'une première étape E1, on dispose la sonde multi-élément 10 en une certaine position z à la surface S du matériau MS à inspecter. Par exemple, la sonde multi-élément 10 peut comporter un milieu de couplage situé entre la surface S du matériau MS à inspecter et les transducteurs ultrasonores 14, 15, pour permettre la propagation des ultrasons entre la surface S du matériau MS à inspecter et les transducteurs ultrasonores 14, 15. Dans un mode de réalisation de l'invention, ce milieu de couplage peut faire partie intégrante de la sonde multi-élément 10 et être solidaire des transducteurs ultrasonores 14, 15 et peut comporter par exemple un gel contenu dans un contenant solidaire des transducteurs ultrasonores 14, 15, la sonde multi-élément 10 se trouvant contre ou en contact avec la surface S du matériau MS à inspecter dans ce cas. Dans un autre mode de réalisation de l'invention, ce milieu de couplage ne fait pas partie intégrante de la sonde multi-élément 10 et n'est pas solidaire des transducteurs ultrasonores 14, 15 et peut être ajouté entre la surface S du matériau MS à inspecter et les transducteurs ultrasonores 14, 15, ce milieu de couplage pouvant être par exemple une hauteur d'eau présente entre la surface S du matériau MS à inspecter et les transducteurs ultrasonores 14, 15, par exemple dans le cas où le matériau MS et la sonde multi-élément 10 sont immergés dans de l'eau, la sonde multi-élément 10 se trouvant à une faible distance de la surface S du matériau MS à inspecter dans ce cas.

Le matériau MS à inspecter peut être tout type de matériau, notamment des matériaux à gros grains, tels que par exemple des aciers à gros grains.

La sonde multi-élément 10 comporte M transducteurs ultrasonores émetteurs 14, ces transducteurs ultrasonores émetteurs 14 ayant respectivement un indice i (qui est un premier entier naturel) allant de 1 à M, où M est un deuxième entier naturel prescrit supérieur ou égal à 3. La sonde multi-élément 10 comporte M transducteurs ultrasonores récepteurs 15 ayant respectivement un indice j (qui est un cinquième entier naturel) allant de 1 à M.

Lors d'une deuxième étape E2, postérieure à la première étape E1, les M transducteurs ultrasonores émetteurs 14 d'indice i de la sonde multi-élément 10 émettent successivement un signal ultrasonore S1 contre la surface S du matériau MS en des instants d'émission respectifs $IE_i$ successifs. En réponse à chaque signal ultrasonore S1 émis par chaque transducteur ultrasonore émetteur 14 d'indice i en l'instant d'émission respectif $IE_i$, (et avant l'instant d'émission respectif $IE_{i+1}$ du transducteur ultrasonore émetteur 14 suivant d'indice i+1), les M transducteurs ultrasonores récepteurs 15 d'indice j reçoivent lors de la deuxième étape E2 les signaux ultrasonores x(n, i, j) de mesure qui sont représentatifs de l'amplitude des ultrasons S2 propagés dans le matériau MS, pour j allant de 1 à M. Chaque transducteur ultrasonore récepteur d'indice j reçoit ces signaux ultrasonores x(n, i, j) de mesure en des instants $n.T_e$ d'échantillonnage (après l'instant d'émission respectif $IE_i$ du transducteur ultrasonore émetteur 14 d'indice i et avant l'instant d'émission respectif $IE_{i+1}$ du transducteur ultrasonore émetteur 14 suivant d'indice i+1), où n est un troisième entier naturel allant de 1 à N, où N est un quatrième entier naturel prescrit supérieur ou égal à 2 et où $T_e$ est une période d'échantillonnage prescrite (inverse d'une fréquence d'échantillonnage prescrite). Les M transducteurs ultrasonores émetteurs 14 d'indice i de la sonde multi-élément 10 et les M transducteurs ultrasonores récepteurs 15 d'indice j peuvent avoir la première configuration d'émission-réception, qui sera décrite ci-dessous. Les instants $n.T_e$ d'échantillonnage sont définis à une constante près par rapport à un instant initial.

Suivant un mode de réalisation de l'invention, chaque transducteur ultrasonore 14, 15 peut jouer alternativement le rôle d'émetteur ou de récepteur. Chaque transducteur ultrasonore 14, 15 peut être mis dans un mode émetteur des ultrasons ou dans un mode récepteur des ultrasons. Dans ce cas, les M transducteurs ultrasonores émetteurs 14 d'indice i de la sonde multi-élément 10 sont confondus avec les M transducteurs ultrasonores récepteurs 15 d'indice j de la sonde multi-élément 10.

Suivant un autre mode de réalisation de l'invention, les M transducteurs ultrasonores émetteurs 14 d'indice i de la sonde multi-élément 10 sont distincts des M transducteurs ultrasonores récepteurs 15 d'indice j de la sonde multi-élément 10.

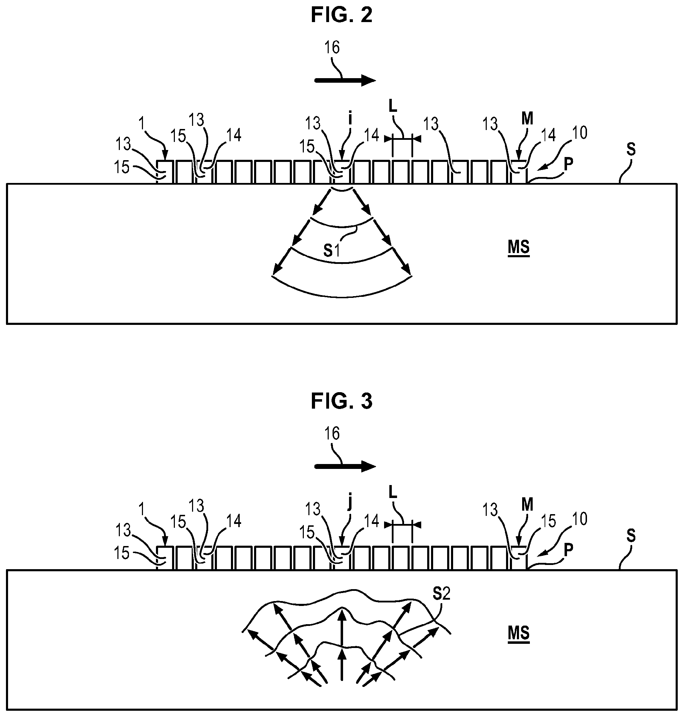

Suivant un mode de réalisation de l'invention, les M transducteurs ultrasonores émetteurs 14 d'indice i et les M transducteurs ultrasonores récepteurs 15 d'indice j sont répartis régulièrement dans la sonde multi-élément 10, ainsi que représenté à titre d'exemple non limitatif aux figures 2 et 3. Par exemple, les M transducteurs ultrasonores émetteurs 14 d'indice i font partie respectivement de M unités émettrices-réceptrices 13 d'ultrasons situées en respectivement M positions prescrites distinctes dans la sonde multi-élément 1, et les M transducteurs ultrasonores récepteurs 15 d'indice j font partie respectivement de ces M unités émettrices-réceptrices 13 d'ultrasons, ainsi que représenté à titre d'exemple non limitatif aux figures 2 et 3. Bien entendu, toute autre répartition des transducteurs ultrasonores 14, 15 peut être prévue.

Suivant un mode de réalisation de l'invention, les M transducteurs ultrasonores émetteurs 14 d'indice i et les M transducteurs ultrasonores récepteurs 15 d'indice j sont répartis dans un plan P, par exemple parallèle à la surface S du matériau MS et pouvant être sur la surface S du matériau MS ou à distance non nulle de la surface S du matériau MS, ainsi que représenté à titre d'exemple non limitatif aux figures 2 à 4.

Suivant un mode de réalisation de l'invention, les M transducteurs ultrasonores émetteurs 14 d'indice i et les M transducteurs ultrasonores récepteurs 15 d'indice j sont répartis suivant un (ou plusieurs) axe rectiligne 16, ainsi que représenté à titre d'exemple aux figures 2 et 3. Dans ce cas, la sonde 10 peut être une barrette multi-éléments où les M transducteurs ultrasonores émetteurs 14 d'indice i et les M transducteurs ultrasonores récepteurs 15 d'indice j sont alignés suivant cet axe rectiligne 16.

Suivant un mode de réalisation de l'invention, le plan P dans lequel se trouvent les M transducteurs ultrasonores émetteurs 14 d'indice i et les M transducteurs ultrasonores récepteurs 15 d'indice j est parallèle au plan de la surface S du matériau MS examiné.

Suivant un mode de réalisation de l'invention, l'un ou plusieurs ou tous les M transducteurs ultrasonores émetteurs 14 d'indice i et les M transducteurs ultrasonores récepteurs 15 d'indice j peut être à distance de la surface S du matériau MS.

Suivant un autre mode de réalisation de l'invention, le plan P dans lequel se trouvent les M transducteurs ultrasonores émetteurs 14 d'indice i et les M transducteurs ultrasonores récepteurs 15 d'indice j est incliné par rapport à la surface S, et l'un ou plusieurs ou tous les M transducteurs ultrasonores émetteurs 14 d'indice i et les M transducteurs ultrasonores récepteurs 15 d'indice j peut être à distance de la surface S du matériau MS.

Suivant un autre mode de réalisation de l'invention, le plan P dans lequel se trouvent les M transducteurs ultrasonores émetteurs 14 d'indice i et les M transducteurs ultrasonores récepteurs 15 d'indice j est à distance non nulle de la surface S, et peut être parallèle ou incliné par rapport à la surface S du matériau MS.

Suivant un mode de réalisation de l'invention, les M transducteurs ultrasonores émetteurs 14 d'indice i sont répartis selon M coordonnées prescrites i.L écartées les unes des autres d'un même pas prescrit L non nul les uns par rapport aux autres (cette coordonnée pouvant être une abscisse i.L suivant un (ou plusieurs) axe rectiligne 16 avec le pas rectiligne L entre eux, ou pouvant être un angle i.L autour d'un autre axe dans le cas des M transducteurs ultrasonores émetteurs 14 d'indice i répartis autour de cet autre axe avec le pas angulaire L entre eux, ou autres), et/ou les M transducteurs ultrasonores récepteurs 15 d'indice j sont répartis selon M coordonnées prescrites j.L écartées les unes des autres d'un pas prescrit L non nul les uns par rapport aux autres (cette coordonnée pouvant être une abscisse j.L suivant un (ou plusieurs) axe rectiligne 16 avec le pas rectiligne L entre eux, ou pouvant être un angle i.L autour d'un autre axe dans le cas des M transducteurs ultrasonores récepteurs 15 d'indice j répartis autour de cet autre axe avec le pas angulaire L entre eux, ou autres), ainsi que représenté à titre d'exemple non limitatif aux figures 2 et 3. Bien entendu, les M transducteurs ultrasonores émetteurs 14 d'indice i peuvent ne pas être répartis selon un même pas prescrit L non nul les uns par rapport aux autres et/ou les M transducteurs ultrasonores récepteurs 15 d'indice j peuvent ne pas être répartis selon un même pas prescrit L non nul les uns par rapport aux autres.

Pour une position de la sonde 10 donnée par rapport à la surface S du matériau MS, on dispose d'une matrice en 3 dimensions de signaux de mesure x(n, i, j), où n correspond à un nombre de pas de temps discret, i est l'indice du transducteur ultrasonore émetteur 14 et j est l'indice du transducteur ultrasonore récepteur 15.

Lors d'une troisième étape E3, postérieure à la deuxième étape E2, un calculateur CAL faisant partie du dispositif 100 de détection de défauts forme une matrice $A_\Delta$ d'échantillonnage, ayant N colonnes $Y_n$. La matrice $A_\Delta$ d'échantillonnage regroupe l'ensemble des signaux x(n, i, j) de mesure acquis pour n allant de 1 à N ayant le même écart de distance $\Delta$ entre les transducteurs ultrasonores récepteurs 15 d'indice j et les transducteurs ultrasonores émetteurs 14 d'indice i. Les N colonnes $Y_n$ sont formées par les signaux x(n, i, j) de mesure et correspondent aux N instants $n.T_e$ d'échantillonnage des M transducteurs ultrasonores récepteurs 15. Le calculateur CAL peut faire partie de la sonde 10 ou est relié ou connecté à la sonde 10. Il peut être prévu comme calculateur CAL par exemple un ou plusieurs calculateur(s) et/ou un ou plusieurs ordinateur(s), et/ou un ou plusieurs processeur(s) et/ou un ou plusieurs serveur(s) et/ou une ou plusieurs machine(s), pouvant être programmé à l'avance par un programme informatique préenregistré de mise en œuvre du procédé et pouvant comporter une ou plusieurs mémoires permanentes, sur laquelle est préenregistré ce programme. Le calculateur CAL exécute automatiquement les étapes du procédé de détection de défauts. Un autre calculateur relié à la sonde 10 ou intégré à la sonde 10 peut enregistrer les acquisitions, que cet autre calculateur ou le calculateur CAL peut ensuite traiter par le procédé suivant l'invention.

Chaque colonne $Y_n$ est formée des signaux x(n, i, j) de mesure pour lesquels une distance d(i, j) entre le transducteur ultrasonore récepteur 15 d'indice j et le transducteur ultrasonore émetteur 14 d'indice i est égale à un écart $\Delta$ prescrit, lequel est identique pour les N colonnes $Y_n$ (et donc égale à la distance d(i', j') entre le transducteur ultrasonore récepteur 15 d'indice j' et le transducteur ultrasonore émetteur 14 d'indice i' pour le couple (i,j) différent du couple (i',j')). On prescrit au calculateur CAL l'écart $\Delta$ pour chaque matrice $A_\Delta$. Cet écart $\Delta$ peut être positif ou nul. On a donc : d(i, j) = d(i', j') = $\Delta$ pour le couple (i,j) différent du couple (i',j') dans la matrice $A_\Delta$.

Les lignes $X_{i,j}$ de la matrice $A_\Delta$ sont formées des signaux x(n, i, j) de mesure pour n allant de 1 à N, pour lesquels l'indice i est identique dans chaque ligne $X_{i,j}$ et l'indice j est identique dans chaque ligne $X_{i,j}$, le couple i, j étant différent d'une ligne $X_{i,j}$ à l'autre.

Le calculateur CAL forme donc la matrice $A_\Delta$ d'échantillonnage, qui est définie par les équations suivantes :

$$A_\Delta = (Y_1 \quad \ldots Y_n \ldots \quad Y_N)$$

$$Y_1 = \begin{pmatrix} x(1,i,j) \\ \vdots \\ x(1,i',j') \end{pmatrix}$$

$$Y_n = \begin{pmatrix} x(n,i,j) \\ \vdots \\ x(n,i',j') \end{pmatrix}$$

$$Y_N = \begin{pmatrix} x(N,i,j) \\ \vdots \\ x(N,i',j') \end{pmatrix}$$

$$A_\Delta = \begin{pmatrix} x(1,i,j) & \cdots x(n,i,j) \cdots & x(N,i,j) \\ \vdots & \vdots & \vdots \\ x(1,i',j') & \cdots x(n,i',j') \cdots & x(N,i',j') \end{pmatrix}$$

$$A_\Delta = \begin{pmatrix} X_{i,j} \\ \vdots \\ X_{i',j'} \end{pmatrix}$$

$$X_{i,j} = (x(1,i,j) \cdots x(n,i,j) \cdots x(N,i,j))$$

$$X_{i',j'} = (x(1,i',j') \cdots x(n,i',j') \cdots x(N,i',j'))$$

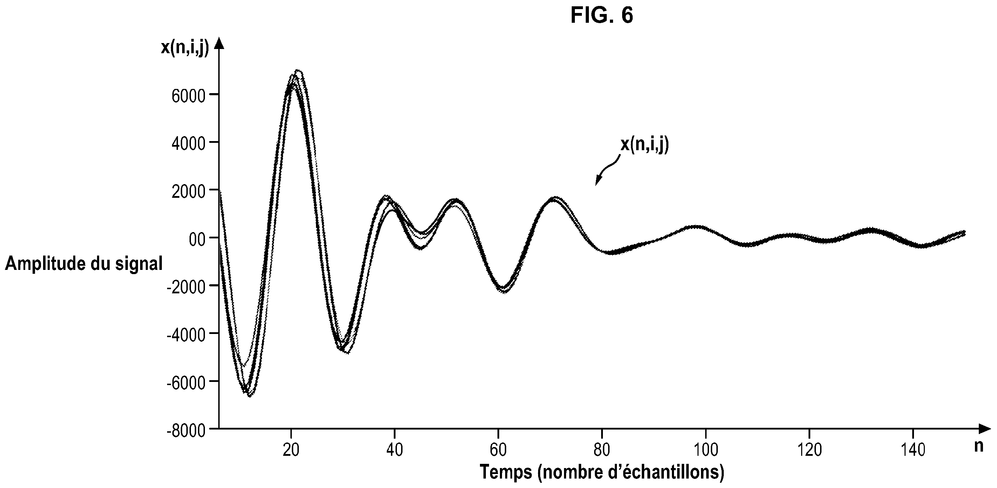

L'écart $\Delta$ est constant dans chaque matrice $A_\Delta$ d'échantillonnage. En l'absence de défauts dans le matériau MS, les signaux $x(n,i,j)$ de même écart $\Delta$ présentent les mêmes caractéristiques spatiales et temporelles. Ceci est illustré sur la figure 6, où plusieurs signaux $x(n,i,j)$ de mesure pour n appartenant à un intervalle compris dans [1, ..., N] avec des couples i,j différents entre le transducteur ultrasonore récepteur 15 d'indice j et le transducteur ultrasonore émetteur 14 d'indice i mais avec le même écart de distance $\Delta = 10$ entre ces transducteurs ultrasonores récepteurs 15 d'indice j et ces transducteurs ultrasonore émetteurs 14 d'indice i ont été représentés à titre d'exemple non limitatif et où ces signaux $x(n,i,j)$ de mesure sont sensiblement identiques pour des positions différentes de ces transducteurs ultrasonores récepteurs 15 d'indice j et de ces transducteurs ultrasonores émetteurs 14 d'indice i. L'axe des abscisses correspond au temps n en nombre d'échantillons, et l'axe des ordonnées correspond à l'amplitude $x(n,i,j)$ du signal reçu. La fréquence des ondes ultrasonores S1 émises par les transducteurs émetteurs 14 d'indice i est, à titre d'exemple non limitatif, de 5 MHz à la figure 6.

Par exemple, dans chaque colonne $Y_n$ de la matrice $A_\Delta$ d'échantillonnage associée à $\Delta = 5L$, on retrouvera, pour n allant de 1 à N:

- le signal $x(n,1,6)$ émis par le transducteur ultrasonore émetteur 14 d'indice i=1 et reçu par le transducteur ultrasonore récepteur 15 d'indice j=6,
- le signal $x(n,2,7)$ émis par le transducteur ultrasonore émetteur 14 d'indice i=2 et reçu par le transducteur ultrasonore récepteur 15 d'indice j=7,
- le signal $x(n,3,8)$ émis par le transducteur ultrasonore émetteur 14 d'indice i=3 et reçu par le transducteur ultrasonore récepteur 15 d'indice j=8,
- etc...

Lors des étapes E4 à E6 décrites ci-dessous et postérieures à la troisième étape E3, le calculateur CAL met en œuvre un algorithme d'analyse en composantes principales (ACP en abrégé) sur la matrice $A_\Delta$ d'échantillonnage.

Lors de la quatrième E4 postérieure à la troisième étape E3, le calculateur CAL calcule la matrice $C_\Delta$ de covariance correspondant à la matrice $A_\Delta$ d'échantillonnage décrite ci-dessus. Le coefficient $c_{r,q}$, de la r-ième ligne et de la q-ième colonne de la matrice $C_\Delta$ de covariance est égal à : $c_{r,q} = cov(Y_r, Y_q)$ pour r étant un entier naturel allant de 1 à N et q étant un entier naturel allant de 1 à N, où $Y_r$, $Y_q$ désignent les colonnes de la matrice $A_\Delta$ d'échantillonnage. La matrice $C_\Delta$ de covariance est calculée en fonction de la matrice $A_\Delta$ d'échantillonnage suivant l'équation suivante, pour n allant de 1 à N :

$$A_\Delta = (Y_1 \quad \dots Y_n \dots \quad Y_N)$$

$$C_\Delta = \begin{pmatrix} \mathrm{cov}(Y_1, Y_1) = \mathrm{var}(Y_1) & \cdots \mathrm{cov}(Y_1, Y_n) \cdots & \mathrm{cov}(Y_1, Y_{N,}) \\ \vdots & \vdots & \vdots \\ \mathrm{cov}(Y_N, Y_1) & \cdots \mathrm{cov}(Y_N, Y_n) \cdots & \mathrm{cov}(Y_N, Y_N) = \mathrm{var}(Y_N) \end{pmatrix}$$

où var désigne la variance d'une colonne et cov désigne la covariance entre deux colonnes. La matrice $C_\Delta$ de covariance est carrée, de dimension N x N et symétrique.

Lors de la cinquième étape E5 postérieure à la quatrième étape E4, le calculateur CAL calcule p vecteurs propres $V_k$ et p valeurs propres $\lambda_k$ associées aux vecteurs propres $V_k$ pour la matrice $C_\Delta$ de covariance correspondant à la matrice $A_\Delta$ d'échantillonnage, pour k allant de 1 à p. Le nombre p est un sixième entier naturel prescrit, supérieur ou égal à 2 et est un nombre maximum prescrit de vecteurs propres calculés $V_k$ (et est un nombre maximum prescrit de valeurs propres calculées $\lambda_k$). Par exemple, p=N. Dans un autre exemple, on pourrait avoir p≤N. Dans un autre exemple, on pourrait avoir p<N (on peut calculer moins de vecteurs propres que de nombre N de colonnes de la matrice $C_\Delta$ de covariance). Pour p=N, les vecteurs propres $V_k$ forment une base : toute ligne de la matrice $A_\Delta$ peut être décomposée comme combinaison linéaire des N vecteurs propres $V_k$ pour k allant de 1 à N.

Lors de la sixième E6 postérieure à la cinquième étape E5, le calculateur CAL calcule des projections $X_{i,j}^{\mathrm{proj},k}$ pour k allant de 1 à K des lignes $X_{i,j}$ de la matrice $A_\Delta$ d'échantillonnage sur les K vecteurs propres $V_k$ correspondant aux K plus grandes valeurs propres $\lambda_k$ de la matrice $C_\Delta$ de covariance correspondant à la matrice $A_\Delta$ d'échantillonnage, avec K<p. Les valeurs propres de la décomposition en vecteurs propres d'une matrice de covariance sont réelles positives, du fait que cette matrice de covariance est carrée et symétrique. On prescrit au calculateur CAL ou on détermine par le calculateur CAL le nombre K, qui est un nombre inférieur au nombre maximum p de vecteurs propres $V_k$ et de valeurs propres $\lambda_k$. Pour ce faire, le calculateur peut ordonner les valeurs propres $\lambda_k$ de la matrice $C_\Delta$ de covariance correspondant à la matrice $A_\Delta$ d'échantillonnage et sélectionner les K valeurs propres $\lambda_k$ les plus grandes.

Les signaux de mesure x(n, i, j) peuvent contenir plusieurs informations : les informations associées aux ondes de surfaces, au bruit de structure, mais aussi éventuellement des informations associées à un défaut dans le matériau MS, défaut que l'on souhaite détecter. Les matériaux complexes MS génèrent du bruit à cause des différents phénomènes de diffusion des ondes. Qui plus est, le bruit est omniprésent dans les signaux de mesure x(n, i, j), et au contraire, un défaut n'est pas toujours présent. Même si défaut il y a, alors celui-ci ne représente pas une information en grande quantité sur l'ensemble des signaux visés. Ainsi, l'information contenue dans les K vecteurs propres à grandes valeurs propres $\lambda_k$ est celle du bruit parasite prédominant (typiquement l'onde de surface), tandis que l'information contenue dans les autres vecteurs propres à petites valeurs propres correspond aux éventuels défauts/artéfacts présents dans les signaux. Une propriété de la décomposition en vecteurs propres $V_k$ et en valeurs propres $\lambda_k$ est que les K vecteurs propres $V_k$ correspondant aux K plus grandes valeurs propres $\lambda_k$ vont correspondre à de l'information prédominante, tandis que les vecteurs propres $V_k$ associés aux petites valeurs propres $\lambda_k$ vont correspondre à de l'information davantage noyée dans cette information prédominante. Le nombre K est donc le nombre de composantes à retenir de la décomposition en vecteurs propres de la matrice $C_\Delta$ de covariance correspondant à la matrice $A_\Delta$ d'échantillonnage.

Lors de la septième E7 postérieure à la sixième étape E6, le calculateur CAL soustrait à chacune des lignes $X_{i,j}$ de la matrice $A_\Delta$ d'échantillonnage les projections $X_{i,j}^{\mathrm{proj},k}$ pour k allant de 1 à K de cette ligne $X_{i,j}$ sur les K vecteurs propres $V_k$ correspondant aux K plus grandes valeurs propres $\lambda_k$ de la matrice $C_\Delta$ de covariance correspondant à cette matrice $A_\Delta$ d'échantillonnage. Le résultat de cette opération est, suivant le même formalisme que la matrice $A_\Delta$ d'échantillonnage, des lignes résiduelles $X^*_{i,j}$ de détection de défauts formées par les signaux x*(n, i, j) de mesure résiduels de détection de défauts (appelés signaux x* ci-dessous) pour n allant de 1 à N, pour lesquels l'indice i est identique dans chaque ligne résiduelle $X^*_{i,j}$ de détection de défauts et l'indice j est identique dans chaque ligne résiduelle $X^*_{i,j}$ de détection de défauts, le couple i, j étant différent d'une ligne résiduelle $X^*_{i,j}$ de détection de défauts à l'autre. Cela retire une certaine quantité de bruit des signaux, afin que l'information de défaut du matériau MS prenne le dessus. Ainsi, on soustrait à chaque vecteur ligne $X_{i,j}$ la projection $X_{i,j}^{\mathrm{proj}}$ de lui-même sur les K vecteurs propres $V_k$ correspondant aux K plus grandes valeurs propres $\lambda_k$. Le nombre K est donc le nombre de composantes retirées. Le calculateur CAL calcule donc les lignes résiduelles $X^*_{i,j}$ de détection de défauts correspondant aux signaux x*(n, i, j) pour n allant de 1 à N de mesure résiduels de détection de défauts, qui sont définis par les équations suivantes :

$$X_{i,j} = (x(1, i, j) \cdots x(n, i, j) \cdots x(N, i, j))$$

$$X_{i,j}^* = (\mathrm{x}^*(1, \mathrm{i}, \mathrm{j}) \cdots \mathrm{x}^*(\mathrm{n}, \mathrm{i}, \mathrm{j}) \cdots \mathrm{x}^*(\mathrm{N}, \mathrm{i}, \mathrm{j}))$$

$X_{i,j}^{\mathrm{proj},k}$ est le vecteur projeté de $X_{i,j}$ sur le k-ième vecteur propre $V_k$ :

$$X_{i,j}^{\mathrm{proj},k} = \left(X_{i,k} V_k{}^T\right) V_k$$

où l'opérateur $()^T$ désigne la transposition,

$X_{i,j}^{\mathrm{proj}}$ est la somme des vecteurs projetés des $X_{i,j}$ sur les K vecteurs propres $V_1$, ..., $V_k$, ..., $V_k$ pour k allant de 1 à K:

$$X_{i,j}^{\mathrm{proj}} = \sum_{k=1}^{K} X_{i,j}^{\mathrm{proj},k}$$

où $V_k$ est un vecteur ligne. Par conséquent, lors de la septième E7, le calculateur CAL soustrait à chacune des lignes $X_{i,j}$ de la matrice $A_\Delta$ d'échantillonnage la somme $X_{i,j}^{\mathrm{proj}}$ des projections $X_{i,j}^{\mathrm{proj},k}$ pour k allant de 1 à K de cette ligne $X_{i,j}$ sur les K vecteurs propres $V_k$ correspondant aux K plus grandes valeurs propres $\lambda_k$ de la matrice $C_\Delta$ de covariance correspondant à cette matrice $A_\Delta$ d'échantillonnage, pour obtenir la ligne résiduelle $X^*_{i,j}$ de détection de défauts.

On a donc : $X_{i,j}^* = X_{i,j} - X_{i,j}^{\mathrm{proj}}$

Par convention, les vecteurs sont représentés avec une lettre majuscule.

Les signaux $\mathrm{x}^*(\mathrm{n}, \mathrm{i}, \mathrm{j})$ de mesure résiduels de détection de défauts sont donc débarrassés d'une certaine quantité de bruit pour laisser apparaître les petites variations représentant les défauts du matériau MS.

Suivant un mode de réalisation de l'invention, le calculateur CAL calcule les signaux $\mathrm{x}^*(\mathrm{n}, \mathrm{i}, \mathrm{j})$ de mesure résiduels de détection de défauts pour plusieurs écarts $\Delta$ prescrits, qui sont différents entre eux.

Suivant un mode de réalisation de l'invention, le calculateur CAL calcule les signaux $\mathrm{x}^*(\mathrm{n}, \mathrm{i}, \mathrm{j})$ de mesure résiduels de détection de défauts pour l'ensemble des écarts $\Delta$ prescrits correspondant à l'ensemble des combinaisons des M transducteurs ultrasonores émetteurs 14 d'indices i avec les M transducteurs ultrasonores récepteurs 15 d'indices j.

Suivant un mode de réalisation de l'invention, K peut être égal d'un écart $\Delta$ prescrit à l'autre et donc d'une matrice $A_\Delta$ d'échantillonnage à l'autre.

Suivant un autre mode de réalisation de l'invention, K peut être différent d'un écart $\Delta$ prescrit à l'autre et donc d'une matrice $A_\Delta$ d'échantillonnage à l'autre.

Suivant l'invention, le calculateur CAL effectue, lors d'une huitième E8 postérieure à la septième étape E7, un post-traitement de détection de défauts du matériau MS à partir des signaux $\mathrm{x}^*(\mathrm{n}, \mathrm{i}, \mathrm{j})$ de mesure résiduels de détection de défauts.

Suivant un mode de réalisation de l'invention, le calculateur CAL effectue, lors de la huitième étape E8, comme post-traitement de détection de défauts, un algorithme de focalisation sur les signaux $\mathrm{x}^*(\mathrm{n}, \mathrm{i}, \mathrm{j})$ de mesure résiduels de détection de défauts. Bien entendu, le post-traitement de détection de défauts du matériau MS peut être autre que l'algorithme de focalisation, ou peut même être absent, la huitième étape E8 étant facultative.

On décrit ci-dessous des modes de réalisation de l'invention de cet algorithme de focalisation, du type focalisation tout point (FTP en abrégé, ou TFM en anglais), lors de l'étape E8.

Suivant un mode de réalisation de l'invention, l'algorithme de focalisation est effectué lors de l'étape E8 par le calculateur CAL sur les signaux $\mathrm{x}^*(\mathrm{n}, \mathrm{i}, \mathrm{j})$ de mesure résiduels de détection de défauts. Le calculateur CAL calcule une image dans laquelle chaque pixel de l'image représente un point sondé w du matériau MS auquel est associé une amplitude focalisée pour ledit point sondé w.

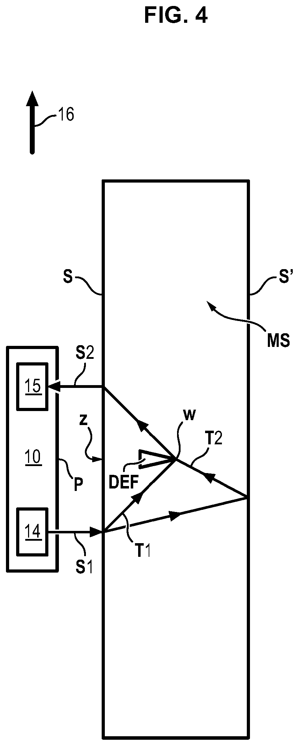

A titre d'exemple non limitatif, lors d'un tir ultrasonore à une position z de la sonde multi-élément 10, un (ou plusieurs) transducteur émetteur 14 émettent des ondes ultrasonores S1 qui pénètrent dans le matériau MS au niveau de sa surface S, puis se propagent dans le matériau MS, avant d'être reçues par un transducteur récepteur 15. Afin d'illustrer la propagation des ondes ultrasonores S1 et S2 dans le matériau, sur la figure 4 ont été représentés un premier trajet T1 constituant un chemin court pour les ondes ultrasonores S1 et S2, qui sont diffractées par le défaut DEF en direction du transducteur récepteur 15, et un second trajet T2 constituant un chemin long pour les ondes ultrasonores S1 et S2, qui sont réfléchies par une autre surface S' du matériau M, éloignée de sa surface S, en direction du défaut DEF puis rejoignent le transducteur récepteur 15.

Dans une approche, les différentes configurations se distinguent entre elles par des fonctions d'émetteur ou de récepteur remplies par différents transducteurs 14, 15.

Par exemple, dans une première configuration d'émission-réception, un premier transducteur 14 (ou un premier ensemble de transducteurs 14) est excité individuellement avec un signal électrique impulsionnel afin d'émettre des ultrasons S1. Ces ultrasons se propagent dans le matériau, et sont reçus ensuite par tous les transducteurs 14, 15 (ou par un second ensemble de transducteurs 15). Ensuite, à la même position de sonde z, un autre transducteur 14 (ou un autre premier ensemble de transducteurs 14) est excité individuellement avec un signal électrique impulsionnel afin d'émettre des ultrasons S1. Ces ultrasons S1 se propagent dans le matériau, et sont reçus ensuite par tous les transducteurs 14, 15 (ou par un autre second ensemble de transducteurs 15). De préférence, chacun des transducteurs 14, 15 émet des ultrasons dans au moins une configuration de sonde à une position z. Typiquement chacun des transducteurs 14, 15 est tour-à-tour l'unique transducteur émetteur, tandis que tous les transducteurs 14, 15 reçoivent les ultrasons. Il y a alors autant de tirs ultrasonores que de transducteurs 14, 15 dans la première configuration d'émission-réception. Bien entendu, cette première configuration d'émission-réception n'est pas limitative et d'autres configurations d'émission-réception des transducteurs 14 et 15 peuvent être prévues.

Suivant un mode de réalisation de l'invention, l'algorithme de focalisation en tout point comporte lors de l'étape E8 une étape de calcul par le calculateur CAL d'un indicateur I*(w) pour chaque position sondée w de la manière suivante :

$$I^*(\mathbf{w}) = \sum_{i=1}^{M}\sum_{j=1}^{M} x^*(t(\mathbf{w},i,j),i,j)$$

où t(w, i, j) correspond au temps de trajet (exprimé en nombre d'échantillons) pour un signal émis par le transducteur ultrasonore émetteur d'indice i, réfléchi en la position sondée w et reçu par le transducteur ultrasonore récepteur d'indice j, t(w, i, j) correspond à l'un des instants n.Te d'échantillonnage et où n est calculé entre 1 et N, et une étape de formation, par le calculateur CAL, d'une image I*, pour laquelle w représente les positions sondées dans une coupe transversale du matériau MS et correspond à des positions de pixels de l'image I*, la valeur des pixels de l'image I* aux positions w étant égale à l'indicateur I*(w). Ainsi, w représente une position sondée dans une coupe transversale du matériau et correspond à une position d'un pixel de l'image I*, la valeur d'un pixel de l'image I* à la position w étant égale à l'indicateur I*(w). L'image finale I* est produite lorsque l'on a calculé les indicateurs I* pour les positions w de tous les pixels de l'image I*.

Ainsi, t(w, i, j) peut être le temps de trajet pour un signal ultrasonore :

- émis par le transducteur i,
- réfléchi par un point du supposé défaut DEF situé à la position w,
- et capté par le transducteur j.

Mais t(w, i, j) peut être également le temps de trajet pour un signal :

- émis par le transducteur i,
- réfléchi par le fond S' du matériau MS,
- réfléchi par un point du supposé défaut DEF situé à la position w,
- et capté par le transducteur j.

Ces temps de trajet t(w, i, j) sont calculés par le calculateur CAL à partir des vitesses des ondes qui dépendent du type de propagation (ondes transversales, ondes longitudinales). Des conversions de mode peuvent également être envisagées lors des différentes réflexions.

L'indicateur I*(w) étant calculé pour une coupe transversale du matériau MS en fonction de la position z de la sonde 10, le calculateur CAL obtiendra finalement une image I* que l'on appellera par la suite imagerie ou image TFM.

La formule de la TFM peut se généraliser lors de l'étape E8 sous la forme :

$$I^*(\mathbf{w}) = \sum_{i=1}^{M}\sum_{j=1}^{M} g\big( x^*(t(\mathbf{w},i,j),i,j) \big)$$

où t(w, i, j) correspond au temps de trajet (exprimé en nombre d'échantillons) pour un signal émis par le transducteur ultrasonore émetteur d'indice i, réfléchi en la position sondée w et reçu par le transducteur ultrasonore récepteur d'indice j, où t(w, i, j) correspond à l'un des instants n.Te d'échantillonnage et où n est calculé entre 1 et N, et une étape de formation, par le calculateur CAL, d'une image I*, pour laquelle w représente les positions sondées dans une coupe transversale du matériau MS et correspond à des positions de pixels de l'image I*, la valeur des pixels de l'image I* aux positions w étant égale à l'indicateur I*(w), où g est une fonction prescrite. Ainsi, w représente une position sondée dans une coupe transversale du matériau et correspond à une position d'un pixel de l'image I*, la valeur d'un pixel de l'image I* à la position w étant égale à l'indicateur I*(w). L'image finale I* est produite lorsque l'on a calculé les indicateurs I* pour les positions w de tous les pixels de l'image I*.

Plusieurs variantes de la TFM lors de l'étape E8 sont possibles en fonction du choix de g. Les choix les plus courants de g sont les suivants :

- g(x) = x,

- g(x) est différent de x,

- g dépend de la position sondée w et/ou de la vitesse de propagation de l'onde,

- g peut également être la valeur absolue du signal ou le module du signal analytique.

Le procédé et le dispositif 100 de détection de défauts suivant l'invention permettent un gain en décibels, ce qui facilite la détection de défauts, notamment à proximité de la surface S du matériau MS.

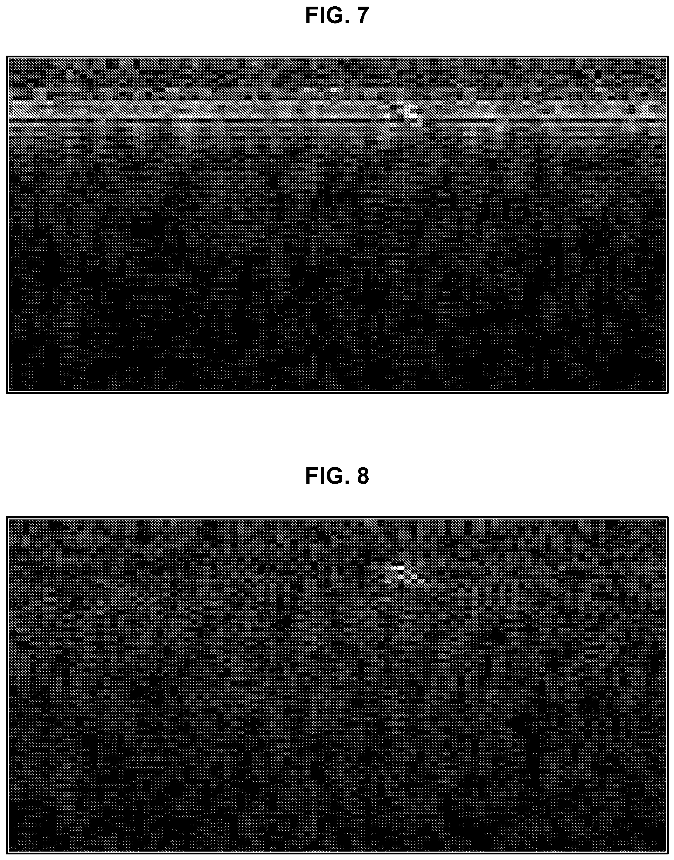

En effet, la figure 7 représente une image TFM obtenue uniquement à partir des signaux x(n, i, j) sans mettre en œuvre le procédé et le dispositif 100 de détection de défauts suivant l'invention. Cette image TFM de la figure 7 contient un défaut proche de la surface S, qui est toutefois difficilement identifiable à cause des phénomènes expliqués ci-dessus.

En appliquant le procédé et le dispositif 100 de détection de défauts suivant l'invention, on obtient, à partir des signaux x*(n, i, j) décrits ci-dessus, l'image TFM de la figure 8, avec dans un premier temps le paramètre K fixé à 4.

Un défaut à environ 2.5 mm de profondeur est mis en évidence sur la Figure 8, qui était noyé dans le bruit très présent proche de la surface S de la Figure 7.

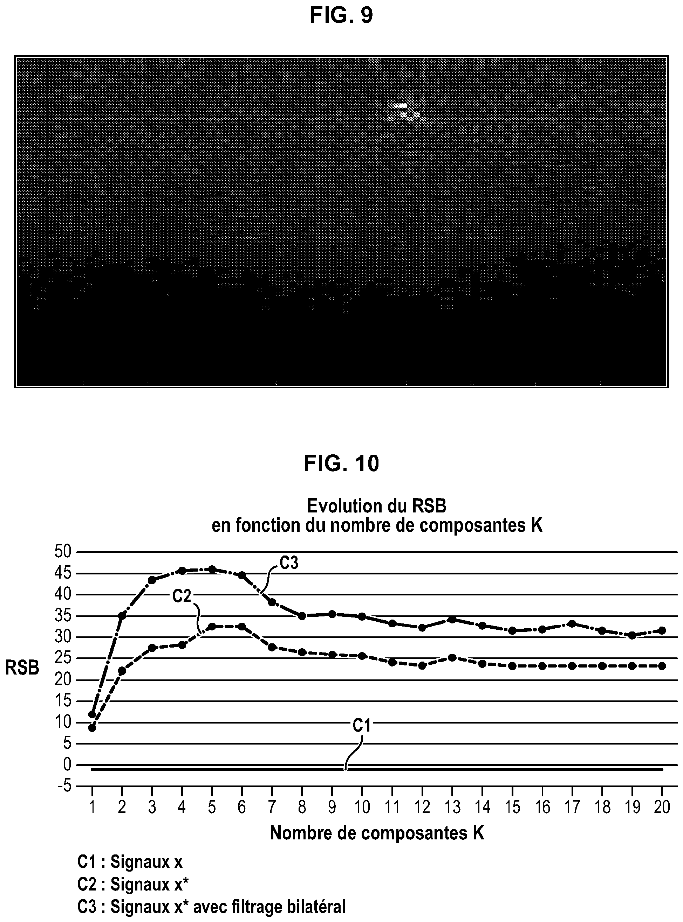

Dans un mode de réalisation de l'invention, une étape supplémentaire E9 de post-traitement de l'image TFM peut être appliquée par le calculateur CAL après la huitième étape E8. Cette étape supplémentaire E9 de post-traitement de l'image TFM peut comprendre un filtrage bilatéral appliqué à l'image. La figure 9 montre l'image obtenue en appliquant un filtrage bilatéral à l'image de la figure 8. Ce filtrage permet d'améliorer la qualité visuelle de l'image ainsi que son RSB (Rapport Signal sur Bruit). Le RSB est un indicateur quantitatif de la qualité d'une telle image. Le RSB s'exprime en décibels (dB) et se calcule par exemple de la manière suivante :

$$RSB = 20 * \log\left(\frac{I_{defaut}^{max}}{I_{bruit}^{max}}\right)$$

Où $I_{defaut}^{max}$ correspond à l'intensité maximale des pixels de la zone de défaut, $I_{bruit}^{max}$ correspond à l'intensité maximale des pixels de la zone de bruit, c'est-à-dire toute la zone sauf la zone de défaut. Un RSB négatif indique que le bruit est d'intensité supérieure au défaut, tandis qu'un RSB positif indique que le bruit est d'intensité inférieure au défaut. Ce filtre est efficace uniquement parce que la qualité de l'image de la figure 8 est suffisante (c'est-à-dire qu'il y a une bonne distinction entre la zone de défaut et le reste).

L'exemple illustré sur les figures 7 et 8 a permis d'obtenir un gain de RSB de 18.1 dB (en faisant passer le RSB de 4.7 à la figure 7 à 22.8 à la figure 8). L'image de la figure 9 a un RSB de 33.2.

Un résumé des performances sur différentes configurations de transducteurs et pour différentes profondeurs de défaut est donné ci-dessous.

[Table 1]

|  | Configuration 1 (profondeur du défaut = 5 mm) | Configuration 2 (profondeur du défaut = 5 mm) | Configuration 3 (profondeur du défaut = 10 mm) | Configuration 4 (profondeur du défaut = 10 mm) | Configuration 5 (profondeur du défaut = 15 mm) |
|---|---|---|---|---|---|
| RSB à partir des signaux x (sans x*) | -1.2 | -25.7 | 4.3 | -37.2 | -4.4 |
| RSB à partir des signaux x* et K=4 | 23.3 | 41.6 | 24.0 | 34.1 | 28.1 |

(suite)

|  | Configuration 1 (profondeur du défaut = 5 mm) | Configuration 2 (profondeur du défaut = 5 mm) | Configuration 3 (profondeur du défaut = 10 mm) | Configuration 4 (profondeur du défaut = 10 mm) | Configuration 5 (profondeur du défaut = 15 mm) |
|---|---|---|---|---|---|
| RSB à partir des signaux x* et K=4 et avec filtrage bilatéral | 29.1 | 56.7 | 35.3 | 50.3 | 42.5 |

Le graphique de la figure 10 présente le RSB en fonction de K pour une même configuration. La courbe C1 montre le RSB obtenu à partir des signaux x (sans x*). La courbe C2 montre le RSB obtenu à partir des signaux x*, sans application d'un filtrage bilatéral de l'image finale. La courbe C3 montre le RSB obtenu à partir des signaux x*, avec application d'un filtrage bilatéral de l'image finale. Le RSB du signal brut, représenté par la courbe C1 formée par une droite horizontale, est de -1.0. Ceci signifie qu'au départ, l'intensité maximale du bruit est plus grande que l'intensité maximale du défaut. En appliquant le procédé et le dispositif 100 de détection de défauts suivant l'invention, avec plus ou moins de composantes retirées (selon K), on améliore nettement le RSB. Le gain en RSB peut être augmenté avec l'ajout du filtrage bilatéral en post-traitement supplémentaire E9 de l'image TFM.

Plus K est grand, plus on retire de composantes, et à force de retirer de l'information, on va finir par retirer celle qui est associée aux éventuels défauts DEF. C'est pour cette raison que les courbes C2 et C3 sont croissantes jusqu'à un certain seuil, puis décroissantes.

La valeur optimale de K n'est pas la même pour toutes les configurations, car elle dépend de la nature du matériau MS et donc des acquisitions.

Suivant un mode de réalisation de l'invention, le nombre K est prescrit au calculateur CAL.

Suivant un mode de réalisation de l'invention, on peut déterminer K par le calculateur CAL en utilisant l'une des méthodes de sélection automatique du nombre de composantes connues par la littérature à partir des résultats obtenus lors des étapes E3 à E5. Ainsi, on garantit que le choix de K est lié et dépendant du cas particulier étudié. Autrement dit, la nature du matériau MS à inspecter influence le choix de K.

Suivant un mode de réalisation de l'invention, le calculateur CAL pourrait mettre en œuvre une méthode de calcul de K à partir des valeurs propres ($\lambda_k$), et/ou des vecteurs propres ($V_k$), et/ou de la matrice $C_\Delta$ de covariance, et/ou de la matrice $A_\Delta$, et/ou des acquisitions x(n,i,j).

Suivant un mode de réalisation de l'invention, le calculateur CAL retient parmi l'ensemble des N valeurs propres $(\lambda_k)_{1 \leq k \leq N}$ issues de la décomposition en vecteurs propres de la matrice de covariance $C_\Delta$, uniquement celles qui sont supérieures à m + 2s, avec m la moyenne des N valeurs propres, et s l'écart-type des N valeurs propres. Par conséquent, les valeurs propres $(\lambda_k)_{1 \leq k \leq N}$ étant rangées par ordre décroissant : $\lambda_1 \geq \lambda_2 \geq \cdots \geq \lambda_N$, l'entier K à retenir par le calculateur CAL est celui pour lequel $\lambda_K > m + 2s$ et $\lambda_{K+1} \leq m + 2s$.

Suivant un mode de réalisation de l'invention, dans le cas où p=N, la moyenne m et l'écart-type s sont calculées par le calculateur CAL de la façon suivante, puisqu'on a accès à toutes les valeurs propres :

$$m = \frac{1}{N} \sum_{k=1}^{N} \lambda_k$$

$$s = \sqrt{\frac{1}{N-1} \sum_{k=1}^{N} (\lambda_k - m)^2} = \sqrt{\frac{1}{N-1} \left( \left( \sum_{k=1}^{N} \lambda_k^2 \right) - Nm^2 \right)}$$

Ces calculs supposent que le nombre p de valeurs propres calculées est égal au nombre maximal N de valeurs propres.

Suivant un autre mode de réalisation de l'invention, le calculateur CAL calcule la moyenne m et l'écart-type s de l'ensemble des valeurs propres directement à partir de la matrice $C_\Delta$ de covariance. On rappelle dans un premier temps une propriété liant les valeurs propres $(\lambda_k)_{1 \leq k \leq N}$ et la matrice $C_\Delta$ de covariance :

$$trace\left(C_\Delta^l\right) = \sum_{k=1}^{N} \lambda_k^l$$

où :

*trace* correspond à l'opérateur, pour une matrice carrée, désignant la somme des termes diagonaux de la matrice, *l* est un entier supérieur ou égal à 1 correspondant à la puissance à laquelle on élève la matrice $C_\Delta$ de covariance dans le membre de gauche, et à la puissance à laquelle on élève les valeurs propres (scalaires) $\lambda_k$ dans le membre de droite.

En utilisant cette propriété avec *l* = 1, on obtient pour la moyenne m le résultat suivant :

$$m = \frac{1}{N} \sum_{k=1}^{N} \lambda_k = \frac{trace(C_\Delta)}{N}$$

En utilisant cette propriété avec *l* = 2, on obtient pour l'écart-type s le résultat suivant :

$$s = \sqrt{\frac{1}{N-1} \sum_{k=1}^{N} (\lambda_k - m)^2} = \sqrt{\frac{1}{N-1}\left(\left(\sum_{k=1}^{N} \lambda_k^2\right) - Nm^2\right)} = \sqrt{\frac{1}{N-1}\left(trace(C_\Delta^2) - Nm^2\right)}$$

Le calculateur CAL peut donc calculer la moyenne m et l'écart-type s directement à partir de la matrice $C_\Delta$ de covariance, et ce avant d'avoir calculé les valeurs propres et les vecteurs propres de la matrice $C_\Delta$ de covariance. Le calculateur CAL peut ensuite calculer seulement les p=K valeurs propres et vecteurs propres.

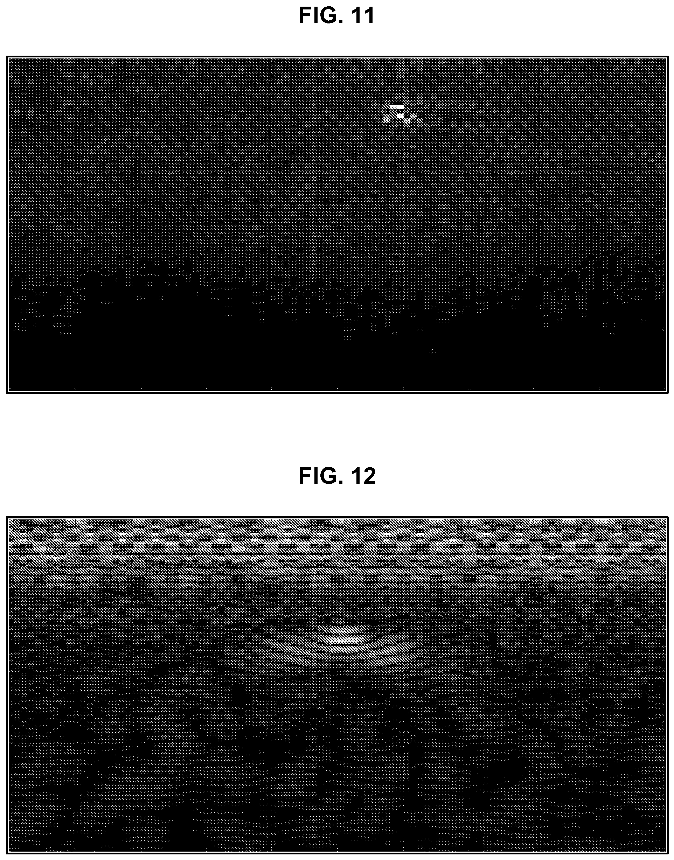

La figure 11 présente l'image de la même configuration qu'en figure 7 avec utilisation du critère de sélection du nombre K de composantes et ajout d'un filtrage bilatéral. Le RSB est de 35.7.

La Figure 12 montre l'image TFM de la configuration utilisée pour le graphe de la figure 10 obtenue uniquement à partir des signaux x(n, i, j) sans mettre en œuvre le procédé et le dispositif 100 de détection de défauts suivant l'invention. (RSB=-1.0).

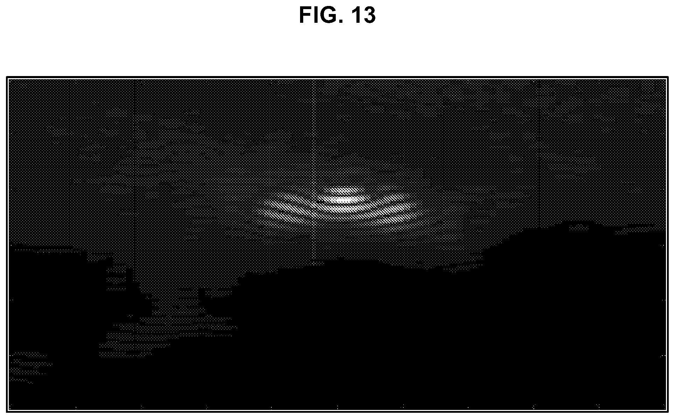

La figure 13 montre l'image TFM obtenue pour le même exemple que précédemment en utilisant les acquisitions transformées x*(n,i,j), avec sélection du nombre K de composantes pour chaque $\Delta$ et ajout d'un filtrage bilatéral. La méthode utilisée pour le choix de K dans cet exemple est celle avec m+2s décrit ci-dessus. Le RSB vaut 46.6, ce qui est légèrement plus grand que le meilleur cas du graphe présenté en figure 10. Cette amélioration vient du fait que pour le graphe en figure 10, le K est le même pour tous les $\Delta$.

Suivant un mode de réalisation de l'invention, le calculateur CAL recalcule les vecteurs propres et le nombre K de composantes à retirer pour chaque nouveau contrôle d'un matériau MS.

Suivant un autre mode de réalisation de l'invention, le calculateur CAL enregistre les vecteurs propres et le nombre K de composantes à retirer d'un matériau MS donné, pour pouvoir les réutiliser les fois suivantes sur ce matériau MS donné. Le temps de calcul en sera automatiquement très largement diminué les fois suivantes.

Suivant un autre mode de réalisation de l'invention, il pourra être intéressant de ne pas considérer l'ensemble des échantillons acquis x(n, i, j) pour n allant de 1 à N, mais de se restreindre à une zone temporelle donnée, par exemple :

$$x\left(\,[n_0, n_0 + 1, \ldots, n_1]\,, i, j\right)$$

avec $n_0$ (respectivement $n_1$) le premier (respectivement le dernier) échantillon considéré pour chaque signal x(n, i, j). Cela permet de se concentrer sur une zone temporelle d'intérêt, correspondant à la profondeur du défaut recherché, et de réduire le temps de calcul.

Suivant un mode de réalisation de l'invention, le procédé de détection de défauts est exécuté pour plusieurs positions z (différentes l'une de l'autre) de la sonde multi-élément 10 à la surface S du matériau MS à inspecter.

Bien entendu, les modes de réalisation, caractéristiques, possibilités, variantes et exemples décrits ci-dessus peuvent être combinés l'un avec l'autre ou être sélectionnés indépendamment l'un de l'autre.

**Revendications**

1. Procédé de détection par ultrasons de défauts dans un matériau (MS), **caractérisé en ce que** le procédé comprend les étapes suivantes :

   a) on émet successivement des ultrasons contre une surface (S) du matériau (MS) par M transducteurs ultrasonores émetteurs d'indice i d'une sonde multi-élément (10), où i est un premier entier naturel allant de 1 à M et où M est un deuxième entier naturel prescrit supérieur ou égal à 3,
   on reçoit, en des instants $n.T_e$ d'échantillonnage par M transducteurs ultrasonores récepteurs d'indice j de la sonde multi-élément (10), des signaux $x(n, i, j)$ de mesure qui sont représentatifs de l'amplitude des ultrasons propagés dans le matériau (MS), où n est un troisième entier naturel allant de 1 à N, où N est un quatrième entier naturel prescrit supérieur ou égal à 2, où $T_e$ est une période d'échantillonnage prescrite et où j est un cinquième entier naturel allant de 1 à M,
   b) on forme par un calculateur (CAL), pour au moins un écart $\Delta$ prescrit, qui est positif ou nul, une matrice ($A_\Delta$) d'échantillonnage, ayant N colonnes $Y_n$,

   les N colonnes $Y_n$, pour n allant de 1 à N, étant formées par l'ensemble des signaux $x(n, i, j)$ de mesure et correspondant aux N instants $n.T_e$ d'échantillonnage,
   chaque colonne $Y_n$ ayant pour l'instant $n.T_e$ d'échantillonnage l'ensemble des signaux $x(n, i, j)$ de mesure pour lesquels une distance entre le transducteur ultrasonore récepteur d'indice j et le transducteur ultrasonore émetteur d'indice i est égale à l'écart $\Delta$ prescrit, lequel est identique pour les N colonnes $Y_n$,
   la matrice ($A_\Delta$) d'échantillonnage ayant des lignes $X_{i,j}$ formées par l'ensemble des signaux $x(n, i, j)$ de mesure, pour lesquels l'indice i est identique dans chaque ligne $X_{i,j}$ et l'indice j est identique dans chaque ligne $X_{i,j}$, le couple i, j étant différent d'une ligne $X_{i,j}$ à l'autre,

   c) on calcule par le calculateur (CAL) une matrice ($C_\Delta$) de covariance à partir de la matrice ($A_\Delta$) d'échantillonnage, la matrice ($C_\Delta$) de covariance étant une matrice carrée et symétrique de dimension N x N,
   d) on calcule par le calculateur (CAL) p vecteurs propres ($V_k$) et p valeurs propres ($\lambda_k$) associées aux vecteurs propres ($V_k$) pour la matrice ($C_\Delta$) de covariance, où p est un sixième entier naturel prescrit, supérieur ou égal à 2 et est un nombre maximum prescrit de vecteurs propres calculés ($V_k$) et de valeurs propres calculées ($\lambda_k$), inférieur ou égal à N,

   e) on calcule par le calculateur (CAL) des projections $X_{i,j}^{\mathrm{proj},k}$ des lignes $X_{i,j}$ de la matrice ($A_\Delta$) d'échantillonnage sur les K vecteurs propres ($V_k$) correspondant aux K plus grandes valeurs propres ($\lambda_k$), où K est un nombre sélectionné inférieur au nombre maximum p de vecteurs propres calculés ($V_k$) et de valeurs propres calculées ($\lambda_k$),
   f) on soustrait par le calculateur (CAL) à chacune des lignes $X_{i,j}$ de la matrice ($A_\Delta$) d'échantillonnage les projections $X_{i,j}^{\mathrm{proj},k}$ de cette ligne $X_{i,j}$ sur les K vecteurs propres ($V_k$), pour obtenir des lignes résiduelles $X^*_{i,j}$ de détection de défauts formées par un ensemble de signaux $x^*(n, i, j)$ de mesure résiduels de détection de défauts, pour lesquels l'indice i est identique dans chaque ligne résiduelle $X^*_{i,j}$ de détection de défauts et l'indice j est identique dans chaque ligne résiduelle $X^*_{i,j}$ de détection de défauts, le couple i, j étant différent d'une ligne résiduelle $X^*_{i,j}$ de détection de défauts à l'autre,
   g) on réalise par le calculateur (CAL) un post-traitement de détection de défauts du matériau (MS) à partir des signaux $x^*(n, i, j)$ de mesure résiduels de détection de défauts.

2. Procédé suivant la revendication 1, **caractérisé en ce que** le post-traitement de détection de défauts comporte un algorithme de focalisation sur les signaux $x^*(n, i, j)$ de mesure résiduels de détection de défauts pour générer une image.

3. Procédé suivant la revendication 2, **caractérisé en ce que** l'algorithme de focalisation est un algorithme de focalisation en tout point, l'algorithme de focalisation en tout point comportant une étape de calcul par le calculateur (CAL) d'un indicateur $I^*(w)$ pour des positions sondées w dans une coupe transversale du matériau (MS) de la manière suivante :

$$I^*(\mathbf{w}) = \sum_{i=1}^{M} \sum_{j=1}^{M} x^*(t(\mathbf{w}, i, j), i, j)$$

où t(w, i, j) correspond à un temps de trajet pour un signal, qui a été émis par le transducteur ultrasonore émetteur d'indice i, qui a été réfléchi en la position sondée w et qui a été reçu par le transducteur ultrasonore récepteur d'indice j, où t(w, i, j) correspond à l'un des instants $n.T_e$ d'échantillonnage et où n est calculé entre 1 et N, et une étape de formation, par le calculateur (CAL), de l'image (I*), pour laquelle les positions sondées w correspondent à des positions de pixels de l'image (I*), la valeur des pixels de l'image (I*) aux positions w étant égale à l'indicateur I*(w).

4.  Procédé suivant la revendication 2, **caractérisé en ce que** l'algorithme de focalisation est un algorithme de focalisation en tout point, l'algorithme de focalisation en tout point comportant une étape de calcul par le calculateur (CAL) d'un indicateur I*(w) pour des positions sondées w dans une coupe transversale du matériau (MS) de la manière suivante :

$$I^*(\mathbf{w}) = \sum_{i=1}^{M} \sum_{j=1}^{M} g(\, x^*(t(\mathbf{w}, i, j), i, j)\,)$$

où t(w, i, j) correspond à un temps de trajet pour un signal, qui a été émis par le transducteur ultrasonore émetteur d'indice i, qui a été réfléchi en la position sondée w et qui a été reçu par le transducteur ultrasonore récepteur d'indice j, où t(w, i, j) correspond à l'un des instants $n.T_e$ d'échantillonnage et où n est calculé entre 1 et N, et une étape de formation, par le calculateur (CAL), de l'image (I*), pour laquelle les positions sondées w correspondent à des positions de pixels de l'image (I*), la valeur des pixels de l'image (I*) aux positions w étant égale à l'indicateur I*(w) et où g est une fonction prescrite.

5.  Procédé suivant l'une quelconque des revendications 2 à 4, **caractérisé en ce qu'**il comporte en outre l'étape suivante :
    h) on réalise par le calculateur (CAL) un filtrage bilatéral de l'image.

6.  Procédé l'une quelconque des revendications précédentes, **caractérisé en ce que** l'on calcule par le calculateur (CAL) le nombre entier K, pour lequel $\lambda_K$ > m + 2s et $\lambda_{K+1}$ ≤ m + 2s , où

    $(\lambda_k)_{1 \le k \le N}$ désigne les valeurs propres pour un septième entier naturel k allant de 1 à N, m est la moyenne des N valeurs propres $(\lambda_k)_{1 \le k \le N}$,
    s est l'écart-type des N valeurs propres $(\lambda_k)_{1 \le k \le N}$.

7.  Procédé suivant l'une quelconque des revendications précédentes, **caractérisé en ce que** les M transducteurs ultrasonores émetteurs d'indice i et les M transducteurs ultrasonores récepteurs d'indice j sont répartis régulièrement par rapport à la surface (S) du matériau (MS).

8.  Procédé suivant l'une quelconque des revendications précédentes, **caractérisé en ce que** les M transducteurs ultrasonores émetteurs d'indice i font partie respectivement de M unités émettrices-réceptrices d'ultrasons situées en respectivement M positions prescrites distinctes dans la sonde multi-élément, et les M transducteurs ultrasonores récepteurs d'indice j font partie respectivement des M unités émettrices-réceptrices d'ultrasons.

9.  Procédé suivant l'une quelconque des revendications précédentes, **caractérisé en ce que** les M transducteurs ultrasonores émetteurs d'indice i et les M transducteurs ultrasonores récepteurs d'indice j sont répartis dans un plan (P).

10. Procédé suivant l'une quelconque des revendications précédentes, **caractérisé en ce que** les M transducteurs ultrasonores émetteurs d'indice i et les M transducteurs ultrasonores récepteurs d'indice j sont répartis suivant au moins un axe rectiligne (16).

11. Procédé l'une quelconque des revendications précédentes, **caractérisé en ce que** l'on calcule par le calculateur (CAL) les signaux x*(n, i, j) de mesure résiduels de détection de défauts pour plusieurs écarts ∆ prescrits, qui sont

différents entre eux.

12. Procédé suivant la revendication 11, **caractérisé en ce que** l'on calcule par le calculateur (CAL) les signaux $x^*(n, i, j)$ de mesure résiduels de détection de défauts pour les écarts $\Delta$ prescrits correspondant à l'ensemble des combinaisons des M transducteurs ultrasonores émetteurs d'indices i avec les M transducteurs ultrasonores récepteurs d'indices j.

13. Procédé suivant l'une quelconque des revendications 1 à 12, **caractérisé en ce que** les M transducteurs ultrasonores émetteurs d'indice i de la sonde multi-élément (10) sont confondus avec les M transducteurs ultrasonores récepteurs d'indice j de la sonde multi-élément (10).

14. Procédé suivant l'une quelconque des revendications 1 à 12, **caractérisé en ce que** les M transducteurs ultrasonores émetteurs d'indice i de la sonde multi-élément (10) sont distincts des M transducteurs ultrasonores récepteurs d'indice j de la sonde multi-élément (10).

15. Dispositif de détection par ultrasons de défauts dans un matériau (MS), **caractérisé en ce que** le dispositif comprend :

une sonde multi-élément (10), comprenant M transducteurs ultrasonores émetteurs d'indice i, aptes à émettre successivement des ultrasons contre une surface (S) du matériau (MS), où i est un premier entier naturel allant de 1 à M et où M est un deuxième entier naturel prescrit supérieur ou égal à 3,
la sonde multi-élément (10) comprenant M transducteurs ultrasonores récepteurs d'indice j, aptes à recevoir, en des instants $n.T_e$ d'échantillonnage des signaux $x(n, i, j)$ de mesure qui sont représentatifs de l'amplitude des ultrasons propagés dans le matériau (MS), où n est un troisième entier naturel allant de 1 à N, où N est un quatrième entier naturel prescrit supérieur ou égal à 2, où $T_e$ est une période d'échantillonnage prescrite et où j est un cinquième entier naturel allant de 1 à M,
le dispositif comprenant un calculateur (CAL), qui est configuré pour

- former pour au moins un écart $\Delta$ prescrit, qui est positif ou nul, une matrice $(A_\Delta)$ d'échantillonnage, ayant N colonnes $Y_n$,

les N colonnes $Y_n$, pour n allant de 1 à N, étant formées par l'ensemble des signaux $x(n, i, j)$ de mesure et correspondant aux N instants $n.T_e$ d'échantillonnage,
chaque colonne $Y_n$ ayant pour l'instant $n.T_e$ d'échantillonnage l'ensemble des signaux $x(n, i, j)$ de mesure pour lesquels une distance entre le transducteur ultrasonore récepteur d'indice j et le transducteur ultrasonore émetteur d'indice i est égale à l'écart $\Delta$ prescrit, lequel est identique pour les N colonnes $Y_n$,
la matrice $(A_\Delta)$ d'échantillonnage ayant des lignes $X_{i,j}$ formées par l'ensemble des signaux $x(n, i, j)$ de mesure, pour lesquels l'indice i est identique dans chaque ligne $X_{i,j}$ et l'indice j est identique dans chaque ligne $X_{i,j}$, le couple i, j étant différent d'une ligne $X_{i,j}$ à l'autre,

- calculer une matrice $(C_\Delta)$ de covariance à partir de la matrice $(A_\Delta)$ d'échantillonnage, la matrice $(C_\Delta)$ de covariance étant une matrice carrée et symétrique de dimension N x N,
- calculer p vecteurs propres $(V_k)$ et p valeurs propres $(\lambda_k)$ associées aux vecteurs propres $(V_k)$ pour la matrice $(C_\Delta)$ de covariance, où p est un sixième entier naturel prescrit, supérieur ou égal à 2 et est un nombre maximum prescrit de vecteurs propres calculés $(V_k)$ et de valeurs propres calculées $(\lambda_k)$, inférieur ou égal à N,

- calculer des projections $X_{i,j}^{proj,k}$ des lignes $X_{i,j}$ de la matrice $(A_\Delta)$ d'échantillonnage sur les K vecteurs propres $(V_k)$ correspondant aux K plus grandes valeurs propres $(\lambda_k)$, où K est un nombre sélectionné inférieur au nombre maximum p de vecteurs propres calculés $(V_k)$ et de valeurs propres calculées $(\lambda_k)$,

- soustraire à chacune des lignes $X_{i,j}$ de la matrice $(A_\Delta)$ d'échantillonnage les projections $X_{i,j}^{proj,k}$ de cette ligne $X_{i,j}$ sur les K vecteurs propres $(V_k)$, pour obtenir des lignes résiduelles $X^*_{i,j}$ de détection de défauts formées par un ensemble de signaux $x^*(n, i, j)$ de mesure résiduels de détection de défauts, pour lesquels l'indice i est identique dans chaque ligne résiduelle $X^*_{i,j}$ de détection de défauts et l'indice j est identique dans chaque ligne résiduelle $X^*_{i,j}$ de détection de défauts, le couple i, j étant différent d'une ligne résiduelle $X^*_{i,j}$ de détection de défauts à l'autre,

g) réaliser un post-traitement de détection de défauts du matériau (MS) à partir des signaux $x^*(n, i, j)$ de mesure résiduels de détection de défauts.

16. Dispositif suivant la revendication 15, **caractérisé en ce que** les M transducteurs ultrasonores émetteurs d'indice i de la sonde multi-élément (10) sont confondus avec les M transducteurs ultrasonores récepteurs d'indice j de la sonde multi-élément (10).

17. Dispositif suivant la revendication 15, **caractérisé en ce que** les M transducteurs ultrasonores émetteurs d'indice i de la sonde multi-élément (10) sont distincts des M transducteurs ultrasonores récepteurs d'indice j de la sonde multi-élément (10).

18. Programme d'ordinateur de détection par ultrasons de défauts, comportant des instructions de code qui conduisent le dispositif suivant l'une quelconque des revendications 15 à 17 à exécuter les étapes du procédé de détection par ultrasons de défauts suivant l'une quelconque des revendications 1 à 14.

**Patentansprüche**

1. Verfahren zur Erkennung mittels Ultraschalls von Fehlern in einem Material (MS), **dadurch gekennzeichnet, dass** das Verfahren die folgenden Schritte umfasst:

a) aufeinanderfolgendes Senden von Ultraschall gegen eine Oberfläche (S) des Materials (MS) durch M sendende Ultraschallwandler mit dem Index i einer Mehrfachelemente-Sonde (10), wobei i eine erste natürliche Ganzzahl von 1 bis M ist und wobei M eine zweite vorgegebene natürliche Ganzzahl größer oder gleich 3 ist, Erhalten, zu den Abtastzeitpunkten $n.T_e$ durch M empfangende Ultraschallwandler mit dem Index j der Mehrfachelemente-Sonde (10), von Messsignale x(n, i, j), die für die Amplitude des sich im Material (MS) ausbreitenden Ultraschalls repräsentativ sind, wobei n eine dritte natürliche Ganzzahl von 1 bis N ist, wobei N eine vierte vorgegebene natürliche Ganzzahl größer oder gleich 2 ist, wobei $T_e$ eine vorgegebene Abtastperiode ist und wobei j eine fünfte natürliche Ganzzahl von 1 bis M ist,

b) Bilden, durch einen Rechner (CAL), für mindestens eine vorgegebene Abweichung $\Delta$, die positiv oder null ist, einer Abtastmatrix ($A_\Delta$) mit N Spalten $Y_n$,

wobei die N Spalten $Y_n$ für n von 1 bis N durch die Gesamtheit der Messsignale x(n, i, j) gebildet werden und den N Abtastzeitpunkten $n.T_e$ entsprechen,
wobei jede Spalte $Y_n$ für den Abtastzeitpunkt $n.T_e$ die Gesamtheit der Messsignale x(n, i, j) hat, für die ein Abstand zwischen dem empfangenden Ultraschallwandler mit dem Index j und dem sendenden Ultraschallwandler mit dem Index i gleich der vorgegebenen Abweichung $\Delta$ ist, die für die N Spalten $Y_n$ identisch ist,
wobei die Abtastmatrix ($A_\Delta$) Zeilen $X_{i,j}$ hat, die von der Gesamtheit der Messsignale x(n, i, j) gebildet werden, für die der Index i in jeder Zeile $X_{i,j}$ identisch ist und der Index j in jeder Zeile $X_{i,j}$ identisch ist, wobei das Paar i, j von einer Zeile $X_{i,j}$ zur anderen unterschiedlich ist,

c) Berechnen, durch den Rechner (CAL), einer Kovarianzmatrix ($C_\Delta$) aus der Abtastmatrix ($A_\Delta$), wobei die Kovarianzmatrix ($C_\Delta$) eine quadratische und symmetrische Matrix der Dimension N x N ist,

d) Berechnen, durch den Rechner (CAL), von p Eigenvektoren ($V_k$) und p Eigenwerten ($\lambda_k$), die den Eigen-vektoren ($V_k$) für die Kovarianzmatrix ($C_\Delta$) zugeordnet sind, wobei p eine sechste vorgegebene natürliche Ganzzahl größer oder gleich 2 ist und eine vorgegebene maximale Anzahl berechneter Eigenvektoren ($V_k$) und berechneter Eigenwerte ($\lambda_k$) kleiner oder gleich N ist,

e) Berechnen, durch den Rechner (CAL), der Projektionen $X_{i,j}^{proj,k}$ der Zeilen $X_{i,j}$ der Abtastmatrix ($A_\Delta$) auf die K Eigenvektoren ($V_k$), die den K größten Eigenwerten ($\lambda_k$) entsprechen, wobei K eine ausgewählte Zahl kleiner als die maximale Anzahl p berechneter Eigenvektoren ($V_k$) und berechneter Eigenwerte ($\lambda_k$) ist,

f) Subtrahieren, durch den Rechner (CAL), von jeder der Zeilen $X_{i,j}$ der Abtastmatrix ($A_\Delta$), die Projektionen $X_{i,j}^{proj,k}$ dieser Zeile $X_{i,j}$ auf die K Eigenvektoren ($V_k$), um Fehlererkennungs-Restzeilen $X^*_{i,j}$ zu erhalten, die von einer Gesamtheit von Fehlererkennungs-Restmesssignalen x*(n, i, j) gebildet werden, für die der Index i in jeder Fehlererkennungs-Restzeile $X^*_{i,j}$ identisch ist und der Index j in jeder Fehlererkennungs-Restzeile $X^*_{i,j}$ identisch ist, wobei das Paar i, j von einer Fehlererkennungs-Restzeile $X^*_{i,j}$ zur anderen unterschiedlich ist,

g) Durchführen, durch den Rechner (CAL), einer Nachbearbeitung zur Erkennung von Fehlern des Materials (MS) anhand der Fehlererkennungs-Restmesssignale x*(n, i, j).

2. Verfahren nach Anspruch 1, **dadurch gekennzeichnet, dass** die Nachbearbeitung der Erkennung von Fehlern einen Algorithmus zur Fokussierung auf die Fehlererkennungs-Restmesssignale x*(n, i, j) umfasst, um ein Bild zu erzeugen.

3. Verfahren nach Anspruch 2, **dadurch gekennzeichnet, dass** der Fokussierungsalgorithmus ein Allpunkt-Fokussierungsalgorithmus ist, wobei der Allpunkt-Fokussierungsalgorithmus einen Schritt der Berechnung, durch den Rechner (CAL), eines Indikators I*(w) für sondierte Positionen w in einem Querschnitt des Materials (MS) wie folgt aufweist:

$$I^*(\mathbf{w}) = \sum_{i=1}^{M} \sum_{j=1}^{M} x^*(t(\mathbf{w}, i, j), i, j)$$

wobei t(w, i, j) einer Laufzeit für ein Signal entspricht, das vom sendenden Ultraschallwandler mit dem Index i gesendet wurde, das an der sondierten Position w reflektiert wurde und das vom empfangenden Ultraschallwandler mit dem Index j empfangen wurde, wobei t(w, i, j) einem der Abtastzeitpunkte $n.T_e$ entspricht und wobei n zwischen 1 und N berechnet wird, und einen Schritt der Bildung des Bildes (I*) durch den Rechner (CAL), für das die sondierten Positionen w Pixelpositionen des Bildes (I*) entsprechen, wobei der Wert der Pixel des Bildes (I*) an den Positionen w gleich dem Indikator I*(w) ist.

4. Verfahren nach Anspruch 2, **dadurch gekennzeichnet, dass** der Fokussierungsalgorithmus ein Allpunkt-Fokussierungsalgorithmus ist, wobei der Allpunkt-Fokussierungsalgorithmus einen Schritt der Berechnung, durch den Rechner (CAL), eines Indikators I*(w) für sondierte Positionen w in einem Querschnitt des Materials (MS) wie folgt aufweist:

$$I^*(\mathbf{w}) = \sum_{i=1}^{M} \sum_{j=1}^{M} g(\, x^*(t(\mathbf{w}, i, j), i, j)\,)$$

wobei t(w, i, j) einer Laufzeit für ein Signal entspricht, das vom sendenden Ultraschallwandler mit dem Index i gesendet wurde, das an der sondierten Position w reflektiert wurde und das vom empfangenden Ultraschallwandler mit dem Index j empfangen wurde, wobei t(w, i, j) einem der Abtastzeitpunkte $n.T_e$ entspricht und wobei n zwischen 1 und N berechnet wird, und einen Schritt der Bildung des Bildes (I*) durch den Rechner (CAL), für das die sondierten Positionen w Pixelpositionen des Bildes (I*) entsprechen, wobei der Wert der Pixel des Bildes (I*) an den Positionen w gleich dem Indikator I*(w) ist und wobei g eine vorgegebene Funktion ist.

5. Verfahren nach einem beliebigen der Ansprüche 2 bis 4, **dadurch gekennzeichnet, dass** es ferner den folgenden Schritt umfasst:
h) Durchführen, durch den Rechner (CAL), einer bilateralen Filterung des Bildes.

6. Verfahren nach einem beliebigen der vorstehenden Ansprüche, **dadurch gekennzeichnet, dass** der Rechner (CAL) die Ganzzahl K berechnet, für die $\lambda_K > m + 2s$ und $\lambda_{K+1} \leq m + 2s$ gilt, wobei

$(\lambda_k)_{1 \leq k \leq N}$ die Eigenwerte für eine siebte natürliche Ganzzahl k von 1 bis N bezeichnet,
m der Mittelwert der N Eigenwerte $(\lambda_k)_{1 \leq k \leq 5N}$ ist,
s die Standardabweichung der N Eigenwerte $(\lambda_k)_{1 \leq k \leq N}$ ist.

7. Verfahren nach einem beliebigen der vorstehenden Ansprüche, **dadurch gekennzeichnet, dass** die M sendenden Ultraschallwandler mit dem Index i und die M empfangenden Ultraschallwandler mit dem Index j in Bezug auf die Oberfläche (S) des Materials (MS) regelmäßig verteilt sind.

8. Verfahren nach einem beliebigen der vorstehenden Ansprüche, **dadurch gekennzeichnet, dass** die M sendenden Ultraschallsender mit dem Index i jeweils zu M Ultraschall-Sende-Empfangs-Einheiten gehören, die sich an jeweils M verschiedenen vorgegebenen Positionen in der Mehrfachelemente-Sonde befinden, und die M empfangenden Ultraschallwandler mit dem Index j jeweils Teil der M Ultraschall-Sende-Empfangs-Einheiten sind.

9. Verfahren nach einem beliebigen der vorstehenden Ansprüche, **dadurch gekennzeichnet, dass** die M sendenden Ultraschallwandler mit dem Index i und die M empfangenden Ultraschallwandler mit dem Index j in einer Ebene (P) verteilt sind.

10. Verfahren nach einem beliebigen der vorstehenden Ansprüche, **dadurch gekennzeichnet, dass** die M sendenden Ultraschallwandler mit dem Index i und die M empfangenden Ultraschallwandler mit dem Index j entlang mindestens einer geraden Achse (16) verteilt sind.

11. Verfahren nach einem beliebigen der vorstehenden Ansprüche, **dadurch gekennzeichnet, dass** der Rechner (CAL) die Fehlererkennungs-Restmesssignale x*(n, i, j) für mehrere vorgegebene Abweichungen $\Delta$ berechnet, die voneinander verschieden sind.

12. Verfahren nach Anspruch 11, **dadurch gekennzeichnet, dass** der Rechner (CAL) die Fehlererkennungs-Restmesssignale x*(n, i, j) für die vorgegebenen Abweichungen $\Delta$ berechnet, die der Gesamtheit der Kombinationen der M sendenden Ultraschallwandler mit dem Index i mit den M empfangenden Ultraschallwandlern mit dem Index j entsprechen.

13. Verfahren nach einem beliebigen der Ansprüche 1 bis 12, **dadurch gekennzeichnet, dass** die M sendenden Ultraschallwandler mit dem Index i der Mehrfachelemente-Sonde (10) mit den M empfangenden Ultraschallwandlern mit dem Index j der Mehrfachelemente-Sonde (10) zusammenfallen.

14. Verfahren nach einem beliebigen der Ansprüche 1 bis 12, **dadurch gekennzeichnet, dass** die M sendenden Ultraschallwandler mit dem Index i der Mehrfachelemente-Sonde (10) von den M empfangenden Ultraschallwandlern mit dem Index j der Mehrfachelemente-Sonde (10) getrennt sind.

15. Vorrichtung zur Erkennung mittels Ultraschalls von Fehlern in einem Material (MS), **dadurch gekennzeichnet, dass** die Vorrichtung umfasst:

eine Mehrfachelemente-Sonde (10) mit M sendenden Ultraschallwandlern mit dem Index i, die in der Lage sind, aufeinanderfolgend Ultraschall gegen eine Oberfläche (S) des Materials (MS) zu senden, wobei i eine erste natürliche Ganzzahl von 1 bis M ist und wobei M eine zweite vorgegebene natürliche Ganzzahl größer oder gleich 3 ist,

wobei die Mehrfachelemente-Sonde (10) M empfangende Ultraschallwandler mit dem Index j umfasst, die in der Lage sind, zu Abtastzeitpunkten n.$T_e$ Messsignale x(n, i, j) zu empfangen, die für die Amplitude des sich im Material (MS) ausbreitenden Ultraschalls repräsentativ sind, wobei n eine dritte natürliche Ganzzahl von 1 bis N ist, wobei N eine vierte vorgegebene natürliche Ganzzahl größer oder gleich 2 ist, wobei $T_e$ eine vorgegebene Abtastperiode ist und wobei j eine fünfte natürliche Ganzzahl von 1 bis M ist,

wobei die Vorrichtung einen Rechner (CAL) umfasst, der ausgelegt ist, um

- für mindestens eine vorgegebene Abweichung $\Delta$, die positiv oder null ist, eine Abtastmatrix ($A_\Delta$) mit N Spalten $Y_n$ zu bilden,

wobei die N Spalten $Y_n$ für n von 1 bis N durch die Gesamtheit der Messsignale x(n, i, j) gebildet werden und den N Abtastzeitpunkten n.$T_e$ entsprechen,

wobei jede Spalte $Y_n$ für den Abtastzeitpunkt n.$T_e$ die Gesamtheit der Messsignale x(n, i, j) hat, für die ein Abstand zwischen dem empfangenden Ultraschallwandler mit dem Index j und dem sendenden Ultraschallwandler mit dem Index i gleich der vorgegebenen Abweichung $\Delta$ ist, die für die N Spalten $Y_n$ identisch ist,

wobei die Abtastmatrix ($A_\Delta$) Zeilen $X_{i,j}$ hat, die von der Gesamtheit der Messsignale x(n, i, j) gebildet werden, für die der Index i in jeder Zeile $X_{i,j}$ identisch ist und der Index j in jeder Zeile $X_{i,j}$ identisch ist, wobei das Paar i, j von einer Zeile $X_{i,j}$ zur anderen unterschiedlich ist,

- eine Kovarianzmatrix ($C_\Delta$) aus der Abtastmatrix ($A_\Delta$) zu berechnen, wobei die Kovarianzmatrix ($C_\Delta$) eine quadratische und symmetrische Matrix der Dimension N x N ist,

- p Eigenvektoren ($V_k$) und p Eigenwerte ($\lambda_k$) zu berechnen, die den Eigenvektoren ($V_k$) für die Kovarianzmatrix ($C_\Delta$) zugeordnet sind, wobei p eine sechste vorgegebene natürliche Ganzzahl größer oder gleich 2 ist und eine vorgegebene maximale Anzahl berechneter Eigenvektoren ($V_k$) und berechneter Eigenwerte ($\lambda_k$)

kleiner oder gleich N ist,

- Projektionen $X_{i,j}^{proj,k}$ der Zeilen $X_{i,j}$ der Abtastmatrix ($A_\Delta$) auf die K Eigenvektoren ($V_k$) zu berechnen, die den K größten Eigenwerten ($\lambda_k$) entsprechen, wobei K eine ausgewählte Zahl kleiner als die maximale Anzahl p berechneter Eigenvektoren ($V_k$) und berechneter Eigenwerte ($\lambda_k$) ist,

- von jeder der Zeilen $X_{i,j}$ der Abtastmatrix ($A_\Delta$) die Projektionen $X_{i,j}^{proj,k}$ dieser Zeile $X_{i,j}$ auf die K Eigenvektoren ($V_k$) zu subtrahieren, um Fehlererkennungs-Restzeilen $X^*_{i,j}$ zu erhalten, die von einer Gesamtheit von Fehlererkennungs-Restmesssignalen x*(n, i, j) gebildet werden, für die der Index i in jeder Fehlererkennungs-Restzeile $X^*_{i,j}$ identisch ist und der Index j in jeder Fehlererkennungs-Restzeile $X^*_{i,j}$ identisch ist, wobei das Paar i, j von einer Fehlererkennungs-Restzeile $X^*_{i,j}$ zur anderen unterschiedlich ist,

g) eine Nachbearbeitung zur Erkennung von Fehlern des Materials (MS) anhand der Fehlererkennungs-Restmesssignale x*(n, i, j) durchzuführen.

16. Vorrichtung nach Anspruch 15, **dadurch gekennzeichnet, dass** die M sendenden Ultraschallwandler mit dem Index i der Mehrfachelemente-Sonde (10) mit den M empfangenden Ultraschallwandlern mit dem Index j der Mehrfachelemente-Sonde (10) zusammenfallen.

17. Vorrichtung nach Anspruch 15, **dadurch gekennzeichnet, dass** die M sendenden Ultraschallwandler mit dem Index i der Mehrfachelemente-Sonde (10) von den M empfangenden Ultraschallwandlern mit dem Index j der Mehrfachelemente-Sonde (10) getrennt sind.

18. Computerprogramm zur Erkennung von Fehlern mittels Ultraschalls, das Codebefehle aufweist, die die Vorrichtung nach einem beliebigen der Ansprüche 15 bis 17 dazu veranlassen, die Schritte des Verfahrens zur Erkennung von Fehlern mittels Ultraschalls nach einem beliebigen der Ansprüche 1 bis 14 auszuführen.

## Claims

1. A method for detecting, by ultrasound, defects in a material (MS), **characterized in that** the method comprises the following steps:

a) successively emitting ultrasound against a surface (S) of the material (MS) by M emitting ultrasonic transducers of index i of a multi-element probe (10), where i is a first natural integer going from 1 to M and where M is a second prescribed natural integer greater than or equal to 3,
receiving, at sampling instants $n.T_e$ by M receiving ultrasonic transducers of index j of the multi-element probe (10), measurement signals x(n, i, j) which are representative of the amplitude of the ultrasounds propagated in the material (MS), where n is a third natural integer going from 1 to N, where N is a fourth prescribed natural integer greater than or equal to 2, where $T_e$ is a prescribed sampling period and where j is a fifth natural integer going from 1 to M,
b) forming by a calculator (CAL), for at least one prescribed gap $\Delta$, which is positive or zero, a sampling matrix ($A_\Delta$), having N columns $Y_n$,

the N columns $Y_n$, for n going from 1 to N, being formed by all the measurement signals x(n, i, j) and corresponding to the N sampling instants $n.T_e$,
each column $Y_n$ having for the sampling instant $n.T_e$ all the measurement signals x(n, i, j) for which a distance between the receiving ultrasonic transducer of index j and the emitting ultrasonic transducer of index i is equal to the prescribed gap $\Delta$, which is identical for the N columns $Y_n$,
the sampling matrix ($A_\Delta$) having rows $X_{i,j}$ formed by all the measurement signals x(n, i, j), for which the index i is identical in each row $X_{i,j}$ and the index j is identical in each row $X_{i,j}$, the pair i, j being different from one row $X_{i,j}$ to another,

c) calculating by the calculator (CAL) a covariance matrix ($C_\Delta$) from the sampling matrix ($A_\Delta$), the covariance matrix ($C_\Delta$) being a square and symmetrical matrix of dimension N x N,
d) calculating by the calculator (CAL) p eigenvectors ($V_k$) and p eigenvalues ($\lambda_k$) associated with the eigenvectors ($V_k$) for the covariance matrix ($C_\Delta$), where p is a sixth prescribed natural integer, greater than or equal to 2 and is a prescribed maximum number of calculated eigenvectors ($V_k$) and of calculated eigenvalues ($\lambda_k$), less than or

equal to N,

e) calculating by the calculator (CAL) projections $X_{i,j}^{proj,k}$ of the rows $X_{i,j}$ of the sampling matrix ($A_\Delta$) on the K eigenvectors ($V_k$) corresponding to the K largest eigenvalues ($\lambda_k$), where K is a selected number smaller than the maximum number p of calculated eigenvectors ($V_k$) and of calculated eigenvalues ($\lambda_k$),

f) subtracting by the calculator (CAL) from each of the rows $X_{i,j}$ of the sampling matrix ($A_\Delta$) the projections $X_{i,j}^{proj,k}$ of this row $X_{i,j}$ on the K eigenvectors ($V_k$), to obtain residual defect detection rows $X^*_{i,j}$ formed by a set of residual defect detection measurement signals x*(n, i, j), for which the index i is identical in each residual defect detection row $X^*_{i,j}$ and the index j is identical in each residual defect detection row $X^*_{i,j}$, the pair i, j being different from one residual defect detection row $X^*_{i,j}$ to another,

g) carrying out by the calculator (CAL) a post-processing for detecting defects in the material (MS) from the residual defect detection measurement signals x*(n, i, j).

2. The method according to claim 1, **characterized in that** the post-processing for detecting defects comprises an algorithm for focusing on the residual defect detection measurement signals x*(n, i, j) to generate an image.

3. The method according to claim 2, **characterized in that** the algorithm for focusing is a focusing algorithm for focusing on every point, the focusing algorithm for focusing on every point comprising a step of calculating by the calculator (CAL) an indicator I*(w) for probed positions w in a cross-section of the material (MS) as follows:

$$I^*(\mathbf{w}) = \sum_{i=1}^{M} \sum_{j=1}^{M} x^*(t(\mathbf{w}, i, j), i, j)$$

where t(w, i, j) corresponds to a travel time for a signal, which was emitted by the emitting ultrasonic transducer of index i, which was reflected at the probed position w and which was received by the receiving ultrasonic transducer of index j, where t(w, i, j) corresponds to one of the sampling instants $n.T_e$ and where n is calculated between 1 and N, and a step of forming, by the calculator (CAL), the image (I*), for which the probed positions w correspond to positions of pixels of the image (I*), the value of the pixels of the image (I*) at the positions w being equal to the indicator I*(w).

4. The method according to claim 2, **characterized in that** the focusing algorithm is a focusing algorithm for focusing on every point, the focusing algorithm for focusing on every point comprising a step of calculating by the calculator (CAL) an indicator I*(w) for probed positions w in a cross-section of the material (MS) as follows:

$$I^*(\mathbf{w}) = \sum_{i=1}^{M} \sum_{j=1}^{M} g\big(x^*(t(\mathbf{w}, i, j), i, j)\big)$$

where t(w, i, j) corresponds to a travel time for a signal, which was emitted by the emitting ultrasonic transducer of index i, which was reflected at the probed position w and which was received by the receiving ultrasonic transducer of index j, where t(w, i, j) corresponds to one of the sampling instants $n.T_e$ and where n is calculated between 1 and N, and a step of forming, by the calculator (CAL ), the image (I*), for which the probed positions w correspond to positions of pixels of the image (I*), the value of the pixels of the image (I*) at the positions w being equal to the indicator I*(w) and where g is a prescribed function.

5. The method according to any one of claims 2 to 4, **characterized in that** it further comprises the following step:
   h) carrying out by the calculator (CAL) a bilateral filtering of the image.

6. The method according to any one of the preceding claims, **characterized by** calculating by the calculator (CAL) the integer K, for which $\lambda_K > m + 2s$ and $\lambda_{K+1} \leq m + 2s$, where

$(\lambda_k)_{1 \leq k \leq N}$ denotes the eigenvalues for a seventh natural number k going from 1 to N,
m is the average of the N eigenvalues $(\lambda_k)_{1 \leq k \leq N}$,
s is the standard deviation of the N eigenvalues $(\lambda_k)_{1 \leq k \leq N}$.

7. The method according to any one of the preceding claims, **characterized in that** the M emitting ultrasonic transducers of index i and the M receiving ultrasonic transducers of index j are evenly distributed with respect to the surface (S) of the material (MS).

8. The method according to any one of the preceding claims, **characterized in that** the M emitting ultrasonic transducers of index i form part respectively of M ultrasound emitting-receiving units located in respectively M distinct prescribed positions in the multi-element probe, and the M receiving ultrasonic transducers of index j form part respectively of the M ultrasound emitting-receiving units.

9. The method according to any one of the preceding claims, **characterized in that** the M emitting ultrasonic transducers of index i and the M receiving ultrasonic transducers of index j are distributed in a plane (P).

10. The method according to any one of the preceding claims, **characterized in that** the M emitting ultrasonic transducers of index i and the M receiving ultrasonic transducers of index j are distributed along at least one rectilinear axis (16).

11. The method according to any one of the preceding claims, **characterized by** calculating by the calculator (CAL) the residual defect detection measurement signals $x^*(n, i, j)$ for several prescribed gaps $\Delta$, which are different from each other.

12. The method according to claim 11, **characterized by** calculating by the calculator (CAL) the residual defect detection measurement signals $x^*(n, i, j)$ for the prescribed gaps $\Delta$ corresponding to all the combinations of the M emitting ultrasonic transducers of indexes i with the M receiving ultrasonic transducers of indexes j.

13. The method according to any one of claims 1 to 12, **characterized in that** the M emitting ultrasonic transducers of index i of the multi-element probe (10) coincide with the M receiving ultrasonic transducers of index j of the multi-element probe (10).

14. The method according to any one of claims 1 to 12, **characterized in that** the M emitting ultrasonic transducers of index i of the multi-element probe (10) are distinct from the M receiving ultrasonic transducers of index j of the multi-element probe (10).

15. A device for detecting, by ultrasound, defects in a material (MS), **characterized in that** the device comprises:

a multi-element probe (10), comprising M emitting ultrasonic transducers of index i, able to successively emit ultrasounds against a surface (S) of the material (MS), where i is a first natural integer going from 1 to M and where M is a second prescribed natural integer greater than or equal to 3,
the multi-element probe (10) comprising M receiving ultrasonic transducers of index j, able to receive, at sampling instants $n.T_e$, measurement signals $x(n, i, j)$ which are representative of the amplitude of the ultrasounds propagated in the material (MS), where n is a third natural integer going from 1 to N, where N is a fourth prescribed natural integer greater than or equal to 2, where $T_e$ is a prescribed sampling period and where j is a fifth natural integer going from 1 to M,
the device comprising a calculator (CAL), which is configured to:

- form for at least one prescribed gap $\Delta$, which is positive or zero, a sampling matrix $(A_\Delta)$, having N columns $Y_n$,

the N columns $Y_n$, for n going from 1 to N, being formed by all the measurement signals $x(n, i, j)$ and corresponding to the N sampling instants $n.T_e$,
each column $Y_n$ having for the sampling instant $n.T_e$ all the measurement signals $x(n, i, j)$ for which a distance between the receiving ultrasonic transducer of index j and the emitting ultrasonic transducer of index i is equal to the prescribed gap $\Delta$, which is identical for the N columns $Y_n$,
the sampling matrix $(A_\Delta)$ having rows $X_{i,j}$ formed by all the measurement signals $x(n, i, j)$, for which the index i is identical in each row $X_{i,j}$ and the index j is identical in each row $X_{i,j}$, the pair i, j being different from one row $X_{i,j}$ to another,

- calculate a covariance matrix $(C_\Delta)$ from the sampling matrix $(A_\Delta)$, the covariance matrix $(C_\Delta)$ being a square and symmetrical matrix of dimension N x N,
- calculate p eigenvectors $(V_k)$ and p eigenvalues $(\lambda_k)$ associated with the eigenvectors $(V_k)$ for the covariance matrix $(C_\Delta)$, where p is a sixth prescribed natural integer, greater than or equal to 2 and is a prescribed maximum number of calculated eigenvectors ($V_k$) and of calculated eigenvalues ($\lambda_k$), less than or equal to N,

- calculate projections $X_{i,j}^{proj,k}$ of the rows $X_{i,j}$ of the sampling matrix ($A_\Delta$) on the K eigenvectors ($V_k$) corresponding to the K largest eigenvalues ($\lambda_k$), where K is a selected number smaller than the maximum number p of calculated eigenvectors ($V_k$) and of calculated eigenvalues ($\lambda_k$),

- subtract from each of the rows $X_{i,j}$ of the sampling matrix ($A_\Delta$) the projections $X_{i,j}^{proj,k}$ of this row $X_{i,j}$ on the K eigenvectors ($V_k$), to obtain residual defect detection rows $X^*_{i,j}$ formed by a set of residual defect detection measurement signals $x^*(n, i, j)$, for which the index i is identical in each residual defect detection row $X^*_{i,j}$ and the index j is identical in each residual defect detection row $X^*_{i,j}$, the pair i, j being different from one residual defect detection row $X^*_{i,j}$ to another,

g) carrying out a post-processing for detecting defects in the material (MS) from the residual defect detection measurement signals $x^*(n, i, j)$.

16. The device according to claim 15, **characterized in that** the M emitting ultrasonic transducers of index i of the multi-element probe (10) coincide with the M receiving ultrasonic transducers of index j of the multi-element probe (10).

17. The device according to claim 15, **characterized in that** the M emitting ultrasonic transducers of index i of the multi-element probe (10) are distinct from the M receiving ultrasonic transducers of index j of the multi-element probe (10).

18. A computer program for detecting defects by ultrasound, comprising code instructions which cause the device according to any one of claims 15 to 17 to execute the steps of the method for detecting defects by ultrasound according to any one of claims 1 to 14.

# FIG. 1

**FIG. 2**

**FIG. 3**

# FIG. 4

# FIG. 5

$$\boxed{E1,z,S,M,MS}$$

$$\downarrow$$

$$\boxed{E2,S1,S2,x(n,i,j),IE_i,IE_{i+1},i,j,N,T_e}$$

$$\downarrow$$

$$\boxed{E3,\Delta,A_\Delta,Y_n,X_{i,j}}$$

$$\downarrow$$

$$\boxed{E4,C_\Delta}$$

$$\downarrow$$

$$\boxed{E5,p,V_k,\lambda_k}$$

$$\downarrow$$

$$\boxed{E6,K, X_{i,j}^{proj,k}, X_{i,j}^{proj},m,s}$$

$$\downarrow$$

$$\boxed{E7,X_{i,j}^*,x^*(n,i,j)}$$

$$\downarrow$$

$$\boxed{E8,I^*(w), I^*}$$

$$\downarrow$$

$$\boxed{E9}$$

FIG. 6

## FIG. 7

## FIG. 8

## FIG. 9

## FIG. 10

**Evolution du RSB
en fonction du nombre de composantes K**

C1 : Signaux x
C2 : Signaux x*
C3 : Signaux x* avec filtrage bilatéral

## FIG. 11

## FIG. 12

## FIG. 13

## RÉFÉRENCES CITÉES DANS LA DESCRIPTION

**Documents brevets cités dans la description**

- FR 3085481 A

- US 2019380684 A1

**Littérature non-brevet citée dans la description**

- Ultrasound NDE imaging through reverberant layers via subspace analysis and projection. **RAMAZAN DEMIRLI et al.** ULTRASONICS SYMPOSIUM (IUS), 2012 IEEE INTERNATIONAL. IEEE, 07 October 2012, 1031-1034